# EUROPÄISCHE PATENTSCHRIFT

(11) **EP 0 874 715 B1**
(45) Veröffentlichungstag und Bekanntmachung des Hinweises auf die Patenterteilung: **13.03.2002**
(21) Anmeldenummer: 96946208.4
(22) Anmeldetag: 18.12.1996
(51) Int. Cl.: B23Q 1/54, B23Q 11/00, B23Q 39/04, B23Q 3/157

(54) **EINRICHTUNG FÜR NUMERISCH GESTEUERTE FERTIGUNGS-, HANDHABUNGS- ODER MESSEINRICHTUNGEN**
DEVICE FOR NUMERICALLY CONTROLLED MACHINING, MANIPULATING OR MEASURING APPARATUS
DISPOSITIF POUR DES APPAREILS DE FABRICATION, MANIPULATION OU MESURE A COMMANDE NUMERIQUE

(30) Priorität: 03.01.1996 DE 19600028; 02.10.1996 DE 19640769
(43) Veröffentlichungstag der Anmeldung: 04.11.1998
(73) Patentinhaber: Heisel, Uwe, 70192 Stuttgart (DE); Gringel, Martin, 72459 Albstadt-Lautlingen (DE)
(72) Erfinder: Heisel, Uwe, 70192 Stuttgart (DE); Gringel, Martin, 72459 Albstadt-Lautlingen (DE)
(74) Vertreter: Kohl, Karl-Heinz
(86) Internationale Anmeldenummer: DE9602443
(87) Internationale Veröffentlichungsnummer: WO9725180

(56) Entgegenhaltungen:
- GB-A- 2 083 795
- US-A- 4 988 244

## Beschreibung

Die Erfindung betrifft eine Einrichtung für numerisch gesteuerte Fertigungs-, Handhabungs- oder Meßeinrichtungen.

Bekannt sind Einrichtungen für numerisch bahngesteuerte Fertigungseinrichtungen, welche für die 5-Achsbearbeitung bzw. zur Positionierung eines Werkzeuges oder einer Meßeinrichtung relativ zu einem Werkstück oder zu einem Objekt im Raum geeignet sind. Konventionelle Maschinenkonzepte weisen speziell für geradlinige Bewegungen die hierfür erforderlichen Konstruktionsmerkmale, wie kartesische Achsanordnung von Vorschubbbaugruppen, auf. Die heutigen modernen Fertigungseinrichtungen entsprechen vom mechanischen Grundaufbau und von der Maschinenkinematik weitestgehend diesen erprobten, hochentwickelten und bewährten Maschinenkonzepten. Für jeden Bewegungsfreiheitsgrad der Maschine in X-, Y- und Z-Richtung wurde ein unterschiedlicher Aufbau der Achsbaugruppen konstruiert und der geradlinigen Vorschubbewegung angepaßt. Jede dieser Baugruppen weist in der Regel eine unterschiedliche Steifigkeit in Abhängigkeit von der Bauweise und der eingesetzten Maschinen- und Antriebselemente auf. Aufgrund der offenen Maschinenkinematik sind die Nachgiebigkeiten bzw. Deformationen additiv, verursacht von allen im Kraftfluß liegenden Bauteilen der Maschine, so daß die Gesamtsteifigkeit der Maschine unterhalb der Steifigkeit ihres schwächsten mechanischen Gliedes liegt. Dies führt bei Bearbeitungsmaschinen, die auf eine hohe Steifigkeit ausgelegt werden, zu entsprechend groß dimensionierten Bauteilquerschnitten mit hohen bewegten Massen.

Ein Nachteil der konventionellen 5-Achs-Maschinen sind die zeitaufwendigen und grundsätzlich manuell durchzuführenden Arbeiten für Einstell- und Ausrichtungsvorgänge bei der Inbetriebnahme und der Justage, wenn Fertigungstoleranzen überschritten werden. Während Fehler in der X-, Y- und Z-Richtung bei kartesischem Maschinenaufbau steuerungstechnisch oder durch Reglereinstellung kompensiert werden können, können Winkelfehler (Gieren, Stampfen, Rollen) nur manuell mit zeitaufwendigen Korrekturmaßnahmen der Maschinengeometrie mittels Justage bzw. Nachbearbeitung durchgeführt werden.

Dem stehen neue Konzepte für Fertigungs- und Meßeinrichtungen zur Positionierung eines Werkzeuges oder einer Meßeinrichtung relativ zu einem Werkstück oder Objekt mittels geschlossenen Stabgelenkkinematiken auf Tripod- (EP 0 202 206 B1) bzw. auf Hexapod-Basis (US-A-5 401 128, WO 92/17313 A1, US-A-5 388 935, EP 0 589 565 A2, US-A-5 392 663, EP 0 534 585 B1, US-A-4 988 244) entgegen. Die Entwicklung bei hexapodalen Maschinen führt zunehmend zu Fertigungseinrichtungen, welche entscheidende Vorteile gegenüber konventionellen Maschinenkonzepten aufweisen. Beispiele hierfür sind kostengünstige Fertigung, geringe Anzahl verschiedener Bauelemente, einfache Montage und Justage und eine Geometrieerzeugung und -korrektur mittels Software. Allerdings ist hierbei ein erheblicher Mehraufwand hinsichtlich der Steuerung und Regelung erforderlich, da selbst bei geradlinigen Bahnbewegungen alle Achsen gleichzeitig geregelt werden müssen. Ein weiterer Nachteil derzeit existierender Werkzeug-, Meß- und Montagemaschinen ist, daß ein hoher Aufwand an Peripherieeinheiten erforderlich ist, um einen automatisierten Werkzeugwechsel bzw. Werkstückwechsel sowie die Werkstückversorgung und Werkstückspannung durchzuführen. Dies führt zwangsläufig zu hohen Anlagenkosten. Hexapodale Maschinen haben hohe Bewegungsfreiheitsgrade, so daß aufwendige Werkzeugwechslermechanismen verzichtbar sind und stattdessen mit Pick-up-Systemen gearbeitet werden kann.

Bei einer bekannten Einrichtung (GB-A-2 083 795) ist eine Bewegungseinheit gesteuert bewegbar. An der als Vllerkstückplatte ausgebildeten Bewegungseinheit sind über Verbindungsglieder umfangsseitig verteilt angeordnete Krafteinleitungsstellen angekoppelt, die in einer gedachten Ankopplungsebene dieser Bewegungseinheit liegen. Mit Abstand zu diesen Verbindungsgliedern sind die Einstellvorrichtungen über weitere Verbindungsglieder an umfangsseitig verteilt angeordneten Krafteinleitungsstellen an einem Gestell angekoppelt, die in einer gedachten Ankopplungsebene dieses Gestelles liegen. Jede Einstellvorrichtung ist mit einem Antrieb versehen, mit denen die zugehörigen Streben gegenüber den Antrieben verschoben werden können.

Bei den bekannten tri- und hexapodalen Maschinen- und Fertigungseinrichtungen treten durch die dort ausgeführte Anordnung der Streben, welche die Bewegung einer Plattform relativ zu einer feststehenden Basis mittels Längenänderungen der beteiligten Streben bewirken, Zug/Druck-Wechselbelastungen in den Streben auf. Dadurch ist eine aufwendige Gestaltung und genaue Fertigung der Verbindungsglieder erforderlich, die als Koppelelemente an beiden Enden der Streben angeordnet sind. Bei diesen Einrichtungen tritt auch eine Nichtlinearität im Steifigkeitsverhalten bei Lastumkehr auf. Außerdem sind dynamische Instabilitäten der Streben besonders unter Druckbelastung zu beobachten. Auch ist eine Vorspannung der Bewegungseinheit zur Steifigkeitsabstimmung nicht möglich. Für den Einsatz dieser neuen Maschinenkonzepte im Fertigungsbereich sind aber gerade hohe Steifigkeiten und lineares Übertragungsverhalten die Grundvoraussetzungen für hochgenaue Fertigungseinrichtungen und stellen somit wichtige und letztlich marktentscheidende Eigenschaften dar.

Der Erfindung liegt die Aufgabe zugrunde, die Einrichtung so auszubilden, daß hohe Steifigkeiten und lineares Übertragungsverhalten gewährleistet sind.

Diese Aufgabe wird bei der Einrichtung erfindungsgemäß mit den Merkmalen des Anspruches 1 gelöst.

Bei der erfindungsgemäßen Einrichtung ist das mechanische Bewegungssystem dynamisch durch eine entsprechende Wahl der Vorspannung in bisher nicht realisierbaren Bereichen abstimmbar, so daß befspielsweisedynamische Instabilitäten bei der spanenden Bearbeitung, wie Rattern, durch Vorspannungsänderung unterdrückt werden können. Die Einstellvorrichtungen stehen durch entsprechend berechnete und eingestellte Verkürzungen bzw. Verlängerungen in der Längsrichtung unter definierter Belastung. Die Bewegungseinheit weist dadurch eine hohe statische und dynamische Steifigkeit sowie ein lineares Bahnbewegungsverhalten durch nicht vorhandenes Umkehrspiel in den Verbindungsgliedem auf. Dies wirkt sich direkt auf eine hohe Konturgenauigkeit der zu bearbeitenden Werkstücke aus. Konstruktiv sind wesentlich vereinfachte Verbindungsglieder möglich, da sie keiner wechselnden Belastungskraft in den Hauptrichtungen unterworfen sind. Die Einrichtung kann in vertikaler, horizontaler Anordnung oder in Kombination dieser Anordnungen zu mehreren Bearbeitungseinheiten zusammengefaßt werden, so daß Transferstraßen, flexible Fertigungssysteme (FFS) und Fertigungsinseln gebildet werden können. Weiterhin können Manipulatoreinheiten für die Montage und auch einzelne bzw. kombinierte Meßeinrichtungen aufgebaut werden.

Die erfindungsgemäße Einrichtung kann zur Fertigung, zur Handhabung, zum Manipulieren, als Meßeinrichtung und dergleichen eingesetzt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in perspektivischer Darstellung eine erfindungsgemäße Einrichtung,
- Fig. 2: in perspektivischer Darstellung Einstellvorrichtungen, Verbindungsglieder und einen Basiskörper der erfindungsgemäßen Einrichtung gemäß Fig. 1,
- Fig. 3: eine Draufsicht auf die Einstellvorrichtungen, Verbindungsglieder und den Basiskörper der erfindungsgemäßen Einrichtung,
- Fig. 4: eine Seitenansicht der Einstellvorrichtungen, Verbindungsglieder und des Basiskörpers der erfindungsgemäßen Einrichtung,
- Fig. 5: in perspektivischer Darstellung zwei erfindungsgemäße Einrichtungen, die als Bearbeitungs- und als Handhabungseinheit ausgebildet sind,
- Fig. 6 und Fig. 7: in einer Darstellung entsprechend den Fig. 3 und 4 eine zweite Ausführungsform einer erfindungsgemäßen Einrichtung,
- Fig. 8: in Seitenansicht die erfindungsgemäße Einrichtung gemäß den Fig. 1 bis 4, deren Basiskörper Schnittstellen für Werkzeuge aufweist,
- Fig. 9: in Seitenansicht die Einstellvorrichtungen, Verbindungsglieder und den Basiskörper einer weiteren Ausführungsform einer erfindungsgemäßen Einrichtung,
- Fig. 10: die Einrichtung gemäß Fig. 9 in perspektivischer Darstellung,
- Fig. 11: in Explosivdarstellung ein Rahmengestell der erfindungs gemäßen Einrichtung,
- Fig. 12: das Rahmengestell gemäß Fig. 11 in montiertem Zustand als Teil der erfindungsgemäßen Einrichtung,
- Fig. 13: eine weitere Ausführungsform einer erfindungsgemäßen Einrichtung,
- Fig. 14: eine mit einem Antrieb versehene Strebe der erfindungsgemäßen Einrichtung,
- Fig. 15 bis Fig. 23: weitere Ausführungsformen von erfindungsgemäßen Einrichtungen,
- Fig. 24: eine Draufsicht auf eine weitere Ausführungsform einer erfindungsgemäßen Einrichtung,
- Fig. 25: in perspektivischer Darstellung eine weitere Ausführungsform einer erfindungsgemäßen Einrichtung,
- Fig. 26: in perspektivischer Darstellung die Einrichtung gemäß Fig. 25 zusammen mit einer Meßeinrichtung.

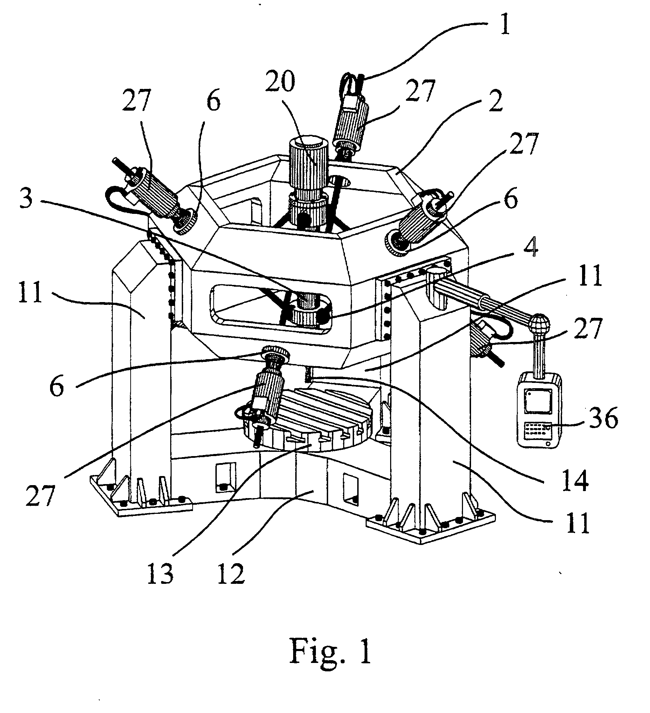

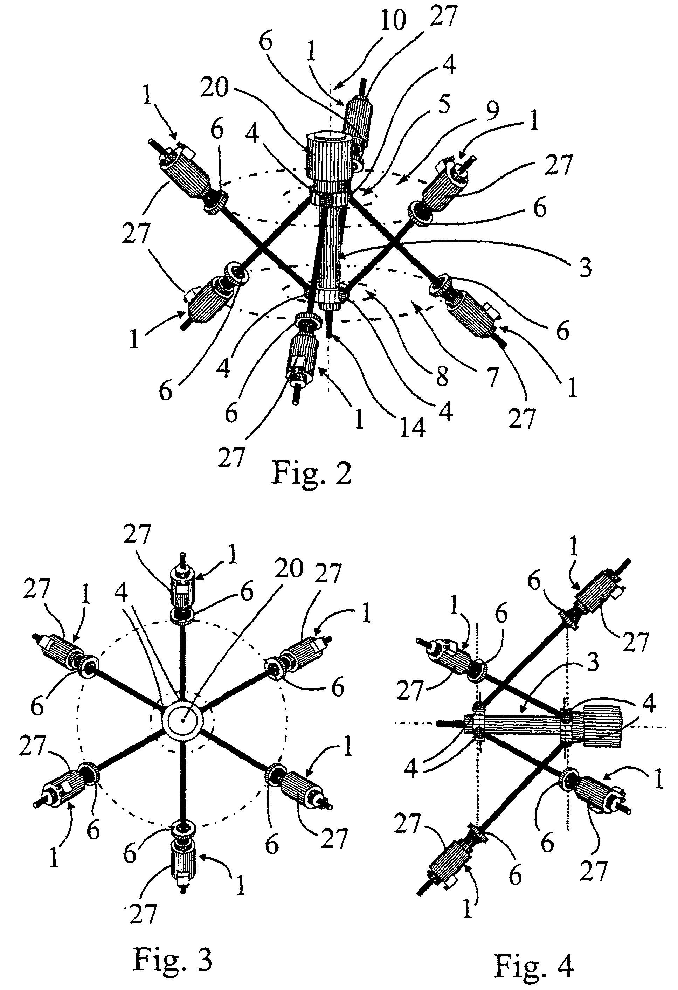

Die Einrichtung gemäß den Fig. 1 bis 4 ist als Werkzeugmaschine ausgebildet. Sie hat ein Rahmengestell 2, an dem über Verbindungsglieder 6 Einstellvorrichtungen 1 gelagert sind. Sie sind über weitere Verbindungsglieder 4 (Fig. 1 und 2) an einen eine Bewegungseinheit bildenden Basiskörper 3 angekoppelt. Im dargestellten Ausführungsbeispiel hat die Einrichtung sechs Einstellvorrichtungen 1. Sie sind jeweils mit einem Antrieb 27 versehen. Sie können als mechanische, elektromechanische, hydraulische oder pneumatische Antriebe ausgebildet werden, mit denen die noch zu beschreibende Stellbewegung des Basiskörpers 3 erzeugt wird. Der Basiskörper 3 ist mit einem Spindelhauptantrieb 20 einer Spindeleinheit versehen, mit dem ein Werkzeug 14 angetrieben werden kann. Die Antriebe 27 sind vorteilhaft an eine Steuerung angeschlossen, die von einem Bedienpaneel 36 (Fig. 1) betätigt werden kann. Es befindet sich außerhalb des Rahmengestelles 2 an einer leicht zugänglichen Stelle.

Das Rahmengestell 2 wird beim Ausführungsbeispiel nach den Fig. 1 bis 4 von drei senkrechten Säulen 11 getragen, die auf dem Untergrund in geeigneter Weise verankert sind. Die Säulen 11 sind an den freien Enden von Armen eines Trägers 12 vorgesehen. Er hat drei unter Winkeln von jeweils 120° zueinander liegende Arme, die auf dem Untergrund aufliegen. Die Säule 11 und der Träger 12 bilden ein Gestellbauteil für die Einrichtung. Auf dem Träger 12 ist mittig ein Werkstücktisch 13 gelagert.

Fig. 2 zeigt die Einrichtung ohne das Rahmengestell 2 und den Gestellbauteil 11, 12. Die Einstellvorrichtungen 1 sind über ihre Verbindungsglieder 4 an umfangsseitig verteilt angeordneten Krafteinleitungsstellen am Basiskörper 3 angekoppelt. Die Verbindungsglieder 4 können einfache Kugelelemente oder Kardangelenke sein. Die Krafteinleitungsstellen am Basiskörper 3 spannen eine erste gedachte Ankopplungsebene 5 des Basiskörpers 3 auf. Die zugehörigen Einstellvorrichtungen 1 erstrecken sich längs der Seiten eines gedachten Tetraeders bis zu ihren entsprechenden Verbindungsgliedern 6, die an umfangsseitig verteilt angeordneten Krafteinleitungsstellen des Rahmengestelles 2 vorgesehen sind. Sie spannen eine erste gedachte Ankopplungsebene 7 des Rahmengestelles 2 auf. Auch diese Verbindungsglieder 6 können einfache Kugelelemente oder Kardangelenke sein. Die Verbindungsglieder 4 und 6 der den Ankopplungsebenen 5 und 7 zugeordneten Einstellvorrichtungen 1 liegen jeweils unter einem Umfangswinkel von 120° zueinander. Diese Einstellvorrichtungen 1 erstrecken sich in der Darstellung gemäß Fig. 2 von ihren Verbindungsgliedern 4 aus schräg nach unten.

Die Einrichtung weist drei weitere Einstellvorrichtungen 1 auf, die über ihre Verbindungsglieder 4 ebenfalls an umfangsseitig verteilt angeordneten Krafteinleitungsstellen am Basiskörper 3 angekoppelt sind. Diese Krafteinleitungsstellen spannen eine zweite gedachte Ankopplungsebene 8 des Basiskörpers 3 auf. Sie ist in einem festen Abstand zur ersten gedachten Ankopplungsebene 5 des Basiskörpers 3 angeordnet. Diese Einstellvorrichtungen 1 erstrecken sich längs der Seiten eines weiteren gedachten Tetraeders bis zu ihren Verbindungsgliedern 6 an umfangsseitig verteilt angeordneten Krafteinleitungsstellen des Rahmengestelles 2 vorgesehen sind. Sie spannen eine zweite gedachte Ankopplungsebene 9 des Rahmengestelles 2 auf, die in einem festen Abstand zur ersten gedachten Ankopplungsebene 7 angeordnet ist. Die gedachte zweite Ankopplungsebene 8 des Basiskörpers 3 und die zweite gedachte Ankopplungsebene 9 des Rahmengestelles 2 weisen gegenüber den ersten Ankopplungsebenen 5 und 7 eine Winkelverdrehung um eine Hauptachse 10 des Basiskörpers 3 auf. Dadurch werden Kollisionen der Einstellvorrichtungen 1 untereinander bzw. mit dem Basiskörper 3 verhindert.

Die den zweiten gedachten Ankopplungsebenen 8, 9 zugeordneten Einstellvorrichtungen 1 erstrecken sich von ihren Verbindungsgliedern 4 aus in der Darstellung gemäß Fig. 2 schräg nach oben. Die Verbindungsglieder 4, 6 dieser Einstellvorrichtungen 1 liegen wiederum in einem gegenseitigen Winkelabstand von 120° zueinander.

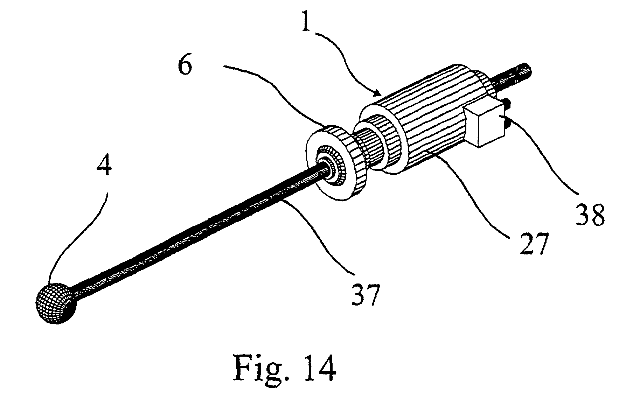

Der Basiskörper 3 ist mit einer integrierten (nicht dargestellten) Spindeleinheit versehen, mit der das Werkzeug 14 drehbar angetrieben wird. Wie Fig. 1 zeigt, sind die Einstellvorrichtungen so am Rahmengestell 2 gelagert, daß die Antriebe 27 außerhalb des Rahmengestelles 2 angeordnet sind. Der Basiskörper 3 befindet sich im Bereich innerhalb des Rahmengestelles 2. Die Einstellvorrichtungen 1 haben jeweils eine Strebe 37 (Fig. 14), die am freien Ende das Verbindungsglied 4 aufweist und die mit dem Antrieb 27 in ihrer Längsrichtung verschoben werden kann. Die Strebe 37 erstreckt sich durch das Verbindungsglied 6, mit dem die Einstellvorrichtung 1 am Rahmengestell 2 gelagert ist. Der Antrieb 27 hat einen Anschluß 38, mit dem.die Einstellvorrichtung 1 an eine Steuerung angeschlossen wird. Durch Betätigen des Antriebes 27 wird die Strebe 37 in der gewünschten Richtung verschoben. Über die Steuerung werden bei der Ausführungsform gemäß den Fig. 1 bis 4 die Einstellvorrichtungen 1 so angesteuert, daß der Basiskörper 3 in die gewünschte Lage und Position verstellt wird. Über das Verbindungsglied 4 ist jede Einstellvorrichtung 1 so mit dem Basiskörper 3 gelenkig verbunden, daß eine freie Schwenkbewegung der jeweiligen Einstellvorrichtung 1 im Verhältnis zum Basiskörper 3 möglich ist. Mittels des Verbindungsgliedes 6, das mit Abstand vom Verbindungsglied 4 vorgesehen ist und durch welches die Strebe 37 der jeweiligen Einstellvorrichtung 1 verläuft, ist eine freie Schwenkbewegung der jeweiligen Einstellvorrichtung im Verhältnis zum Rahmengestell 2 möglich. Somit kann durch entsprechende Verstellung der Streben 37 jeder Einstellvorrichtung 1 der Basiskörper 3 in bezug auf das Rahmengestell 2 frei geschwenkt werden.

Die Ankopplungen der Einstellvorrichtungen 1 am Rahmengestell 2 und am Basiskörper 3 sind so angeordnet, daß bei Stillstandspositionen und bei Bahnbewegungen des Basiskörpers 3 innerhalb des Rahmengestelles 2 die Einstellvorrichtungen 1 durch entsprechend berechnete und eingestellte Verkürzungen bzw. Verlängerungen in der Längsrichtung immer unter definierter Belastung stehen. Diese Verkürzungen und Verlängerungen werden dadurch erreicht, daß die Streben 37 mittels der Antriebe 27 in der gewünschten Richtung relativ zum Antrieb 27 verschoben werden. Dadurch weist der Basiskörper 3 eine hohe statische und dynamische Steifigkeit sowie ein lineares Bahnbewegungsverhalten durch nicht vorhandenes axiales Umkehrspiel in den Verbindungsgliedern 4, 6 auf. Auf diese Weise ergibt sich eine optimierte Maschinenstruktur, die räumlich präzise Bahnbewegungen des Basiskörpers 3 auch unter wirkenden Belastungskräften ermöglicht. Dies gilt sowohl für rotierende Werkzeuge als auch für am Basiskörper 3 vorgesehene Operatoren.

Mit den Einstellvorrichtungen 1 kann der Basiskörper 3 nicht nur in eine bestimmte Position und Lage verstellt, sondern auch längs einer gewünschten Bahn präzise bewegt werden. Im Ausführungsbeispiel nach den Fig. 1 bis 4 sind sechs Einstellvorrichtungen 1 vorgesehen, mit denen die gewünschten Bewegungen und Positionen optimal erreicht werden können. Bei einfacher gestalteten. Einrichtungen können auch nur drei Einstellvorrichtungen 1 vorgesehen werden. Während der Verstellung des Basiskörpers 3 können sich die Einstellvorrichtungen 1 relativ zum Rahmengestell 2 infolge der als einfache Kugelgelenke oder als Kardangelenke ausgebildeten Verbindungsglieder 6 in die gewünschte Richtung bewegen. Die Antriebe 27 der Einstellvorrichtungen 1 sind in bezug auf das Rahmengestell 2 in ihrer Achsrichtung unverstellbar, können aber infolge der Verbindungsglieder 6 relativ zum Rahmengestell in die erforderliche Richtung schwenken.

Die Zuordnung der beiden Ankopplungsebenen 5, 8 des Basiskörpers 3 und die Zuordnung der beiden Ankopplungsebenen 7, 9 des Rahmengestelles 2 kann konstruktiv beliebig in der Weise ausgeführt sein, daß die steifigkeitsbestimmenden Distanzen nach den bekannten konstruktionssystematischen Lösungen ausgeführt werden. Da die Einstellvorrichtungen 1 über ihre entsprechenden Verbindungsglieder 4 an umfangsseitig mit einer Winkelteilung von 120° verteilt angeordneten Krafteinleitungsstellen am Basiskörper 3 und über ihre Verbindungsglieder 6 an umfangsseitig mit einer Winkelteilung von 120° verteilt angeordneten Krafteinleitungsstellen am Rahmengestell 2 angekoppelt sind, kann der Basiskörper 3 einwandfrei in die gewünschte Lage bzw. Position gebracht bzw. längs der gewünschten Bahn präzise bewegt werden. Hierzu trägt in vorteilhafter Weise bei, daß die zweiten gedachten Ankopplungsebenen 8, 9 gegen die ersten gedachten Ankopplungsebenen 5, 7 um einen Winkel von 60° um die Hauptachse 10 des Basiskörpers 3 verdreht vorgesehen sind.

Die Einstellvorrichtungen 1 können auch so angeordnet sein, daß entweder die ersten und zweiten gedachten Ankopplungsebenen 7, 9 des Rahmengestelles 2 oder die ersten und zweiten gedachten Ankopplungsebenen 5, 8 des Basiskörpers 3 zusammenfallen.

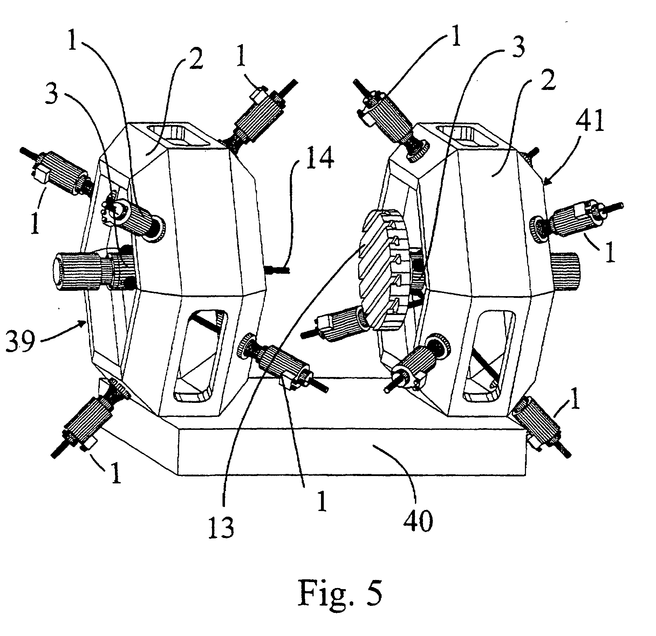

Fig. 5 zeigt die Anwendung zweier Einrichtungen als kombinierte Bearbeitungs- und Handhabungseinheit. Die Bearbeitungseinheit 39 ist - bis auf den Gestellbauteil 11, 12 mit dem Werkstücktisch 13 - gleich ausgebildet wie die Ausführungsform nach den Fig. 1 bis 4. Das Rahmengestell 2 ist im Gegensatz zur vorigen Ausführungsform jedoch vertikal auf einem Gestellbauteil 40 angeordnet. Das Werkzeug 14 liegt dadurch in der Neutralstellung horizontal.

Die Handhabungseinheit 41 hat ebenfalls das Rahmengestell 2 mit den Einstellvorrichtungen 1 und dem Basiskörper 3. Das Rahmengestell 2 ist ebenfalls vertikal auf dem Gestellbauteil 40 angeordnet. Das Rahmengestell 2, die Einstellvorrichtungen 1 und der Basiskörper 3 sind in gleicher Weise ausgebildet und angeordnet wie beim Ausführungsbeispiel nach den Fig. 1 bis 4. Am Basiskörper 3 ist der Werkstücktisch 13 befestigt, auf den die mit dem Werkzeug 14 der Bearbeitungseinheit 39 zu bearbeitenden Werkstücke gespannt werden. Der Werkstücktisch 13 ist vertikal angeordnet. Mit dem Basiskörper 3'kann der Werkstücktisch 13 um die horizontale Achse in die gewünschte Richtung gedreht werden. Die Bearbeitungs- und die Handhabungseinheit 39, 41 arbeiten in gleicher Weise, wie dies anhand der Fig. 1 bis 4 erläutert worden ist. Die Einstellvorrichtungen 1 stehen stets unter einer definierten Zugbelastung, so daß der Basiskörper 3 der beiden Einheiten eine hohe statische und dynamische Steifigkeit aufweist. Während der Bearbeitung des Werkstückes können der Werkstücktisch 13 und/oder das Werkzeug 14 über den zugehörigen Basiskörper 3 in die gewünschte Lage bzw. Positionierung eingestellt und/oder in einer für die Bearbeitung des Werkstückes erforderlichen Bahn bewegt werden. Die beiden Einheiten 39, 41 können auf dem Gestellbauteil 40 in einem solchen Abstand voneinander angeordnet sein, daß die Bewegungen der beiden Basiskörper 3 der beiden Einheiten 39, 41 ausreichen, um das Werkstück in der gewünschten Weise zu bearbeiten. Es ist darüber hinaus auch möglich, die Bearbeitungseinheit 39 und/oder die Handhabungseinheit 41 auf dem Gestellbauteil 40 in z-Richtung verfahrbar auszubilden, so daß der Abstand zwischen den beiden Einheiten 39, 41 geändert werden kann. Im dargestellten Ausführungsbeispiel wird das Werkzeug 14 um seine Achse drehbar angetrieben und kann beispielsweise ein Fräser, ein Bohrer oder dergleichen sein. Der Basiskörper 3 ist zur Aufnahme des Werkzeuges 14 mit einer entsprechenden Aufnahme versehen, die über den Spindelhauptantrieb 20 drehbar angetrieben werden kann.

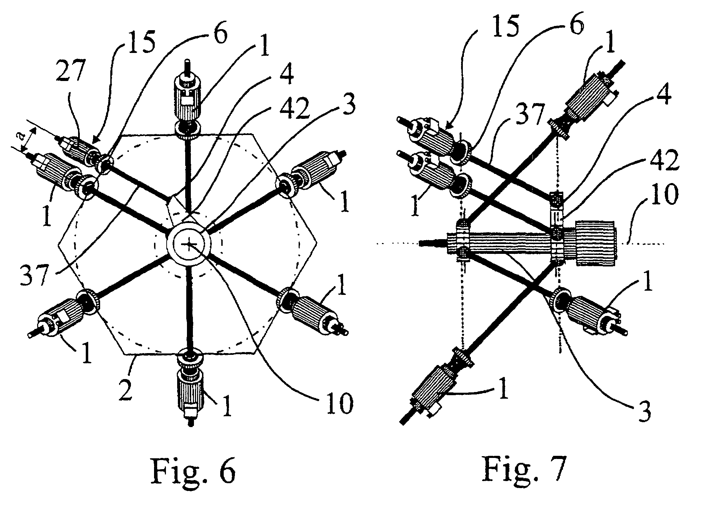

Die Fig. 6 und 7 zeigen eine Ausführungsform, bei der das am Basiskörper 3 während der Bearbeitung und/oder Handhabung des Werkstückes auftretende Drehmoment abgestützt werden kann. Hierzu ist am Basiskörper 3 ein Arm 42 vorgesehen, der sich quer, vorzugsweise senkrecht, zur Hauptachse 10 des Basiskörpers 3 erstreckt. Am freien Ende des Arms 42 ist über ein Verbindungsglied 4 eine zusätzliche Einstellvorrichtung 15 angelenkt, die gleich ausgebildet ist wie die Einstellvorrichtungen 1. Die Einstellvorrichtung 15 ist mit einem Verbindungsglied 6 am Rahmengestell 2 angelenkt, das in Fig. 6 lediglich schematisch dargestellt ist. Die Verbindungsglieder 4, 6 der Einstellvorrichtung 15 können wiederum einfache Kugelgelenke oder Kardangelenke sein. Die Einstellvorrichtung 15 weist den Antrieb 27 auf, der am Rahmengestell 2 gelagert ist und mit dem die Strebe 37 in ihrer Längsrichtung verschoben werden kann. Wie sich aus Fig. 7 ergibt, liegen die Verbindungsglieder 4 der Einstellvorrichtung 15 sowie der entsprechenden Einstellvorrichtungen 1 in einer gemeinsamen Ebene. Die zusätzliche Einstellvorrichtung 15 hat, in Achsrichtung des Basiskörpers 3 gesehen (Fig. 6), einen Abstand a von der benachbarten Einstellvorrichtung 1. Die zusätzliche Einstellvorrichtung 15 ist an die Steuerung angeschlossen und wird zusammen mit den Einstellvorrichtungen 1 während des Einsatzes der Einrichtung so betätigt, daß die beim Arbeiten auf den Basiskörper 3 wirkenden Drehmomente aufgefangen werden. Dadurch kann beispielsweise ein Werkstück mit hoher Genauigkeit bearbeitet werden.

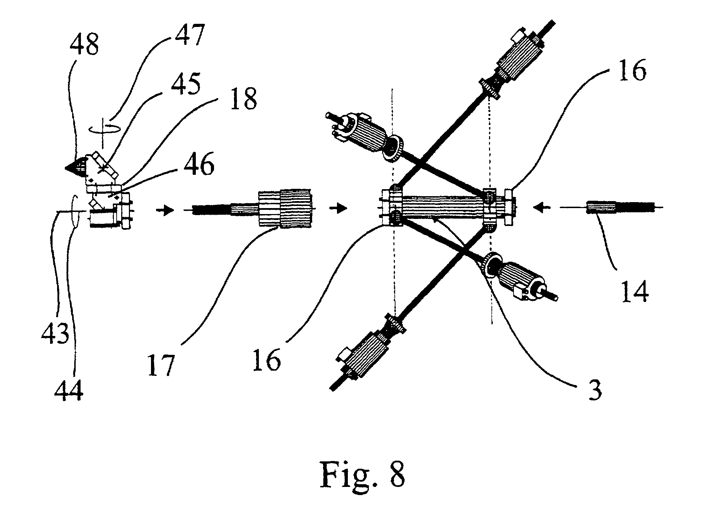

Fig. 8 zeigt die Möglichkeit, am Basiskörper 3 Schnittstellen 16 vorzusehen, an die Werkzeuge 14 bzw. Operatoren 17 sowie weitere Einheiten 18 angeschlossen werden können. Die Schnittstellen 16 sind im dargestellten Ausführungsbeispiel an den beiden Enden des länglichen Basiskörpers 3 vorgesehen. An die in Fig. 8 rechte Schnittstelle 16 wird das Werkzeug 14 angeschlossen, das mit dem (nicht dargestellten) integrierten Spindelantrieb um seine Achse drehbar angetrieben wird. An die in Fig. 8 linke Schnittstelle 16 wird der Operator 17 angeschlossen, auf den die Achseinheit 18 aufgeschoben wird. Sie kann mittels des Operators 17 um eine horizontale Achse 43 gedreht werden (Pfeil 44). Die Achseinheit 18 ist mit einem Kopfstück 45 versehen, das gegenüber einem Grundkörper 46 der Achseinheit 18 um eine in Fig. 8 vertikale Achse 47 gedreht werden kann. Die beiden Drehachsen 43, 47 der Einheit 18 liegen somit senkrecht zueinander. An der Stirnseite des Kopfstückes 45 ist ein Werkzeug 48 vorgesehen. Die Fertigungseinrichtung gemäß Fig. 8 ist im übrigen-gleich ausgebildet wie das Ausführungsbeispiel nach den Fig. 1 bis 4. Der Basiskörper 3 kann entsprechend der Ausführungsform nach den Fig. 6 und 7 auch eine Drehmomentabstützung aufweisen.

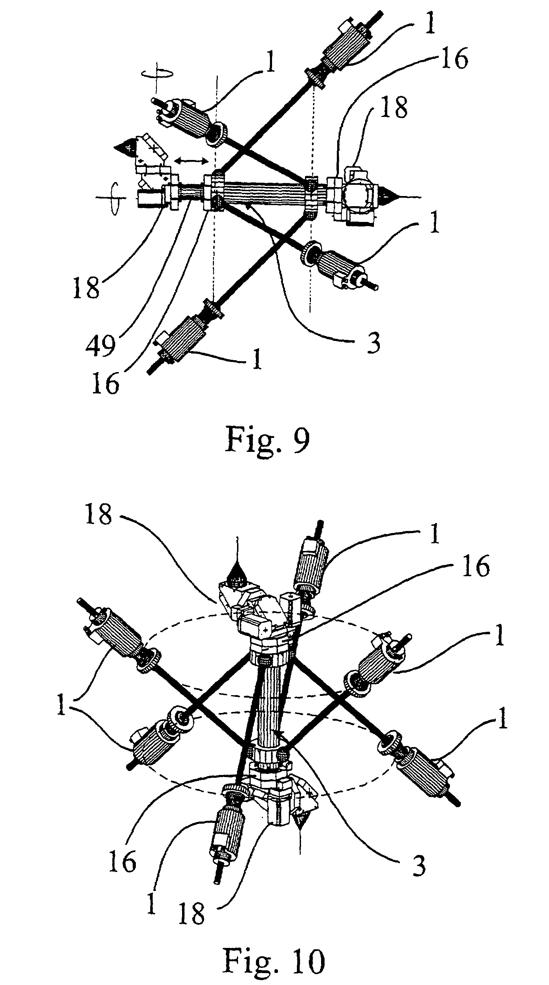

Die Fig. 9 und 10 zeigen eine Ausführungsform, bei der an beide Schnittstellen 16 des Basiskörpers 3 jeweils eine Einheit 18 angeschlossen ist. Die Einheiten 18 sind gleich ausgebildet wie beim Ausführungsbeispiel nach Fig. 8, können aber selbstverständlich jede andere geeignete Ausbildung haben. Die in Fig. 9 linke Einheit 18 sitzt auf einer Stange 49, die im Basiskörper 3 verschiebbar gelagert ist. Die Einheit 18 kann somit auch in Achsrichtung des Basiskörpers 3 verschoben werden. Der zugehörige Verschiebeantrieb ist in den Basiskörper 3 integriert und vorteilhaft an ihn die Steuerungen für die Einstellvorrichtungen 1 angeschlossen. Dies gilt auch für den Antrieb der anderen Einheit 18. Im übrigen ist das Ausführungsbeispiel gemäß den Fig. 9 und 10 gleich ausgebildet wie die Ausführungsform nach den Fig. 1 bis 4. Es kann auch eine Drehmomentabstützung für den Basiskörper 3 entsprechend der Ausführungsform nach den Fig. 6 und 7 vorgesehen sein.

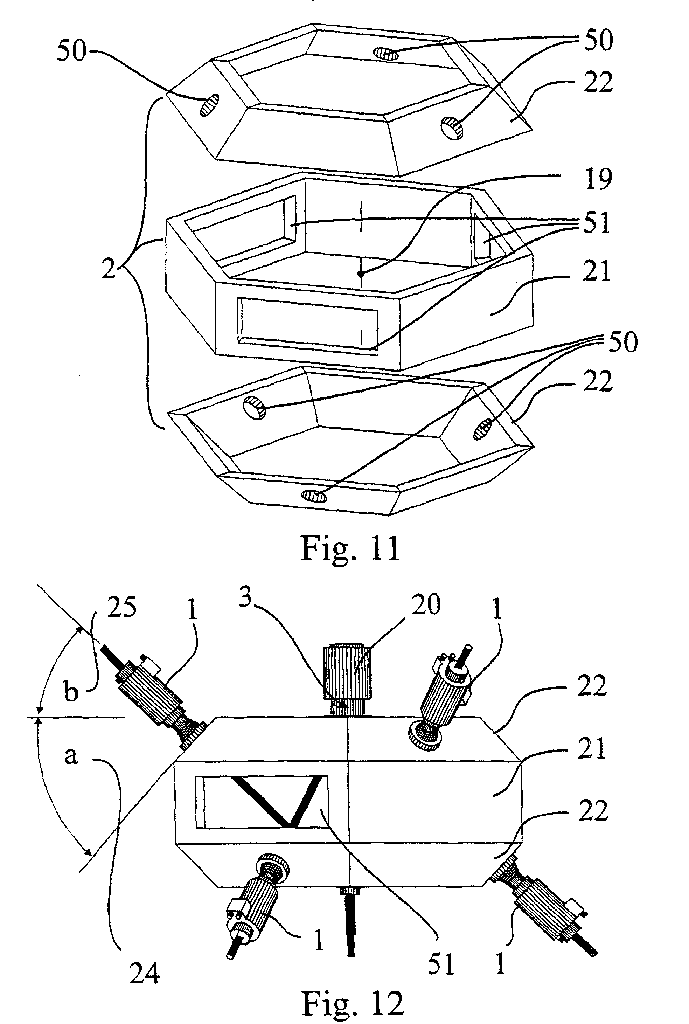

Die Fig. 11 und 12 zeigen im einzelnen den Aufbau des Rahmengestelles 2. Es begrenzt einen Innenraum 19, der, wie sich aus Fig. 11 ergibt, sechseckigen Querschnitt hat. Im Innenraum 19 ist zumindest teilweise der Basiskörper 3 untergebracht. Sein Spindelhauptantrieb 20 ragt über das Rahmengestell 2 (Fig. 12). Das Rahmengestell 2 hat einen mittleren Gestellteil 21, der die Form eines regelmäßigen Sechseckes hat. Dieser Gestellteil 21 kann auch eine andere regelmäßige vieleckige Querschnittsform aufweisen. Die Wände des Gestellteiles 21 liegen im dargestellten Ausführungsbeispiel jeweils unter einem Winkel von 60° zueinander. Der durch den Gestellteil 21 begrenzte Innenraum hat über die Höhe des Gestellteiles 21 konstanten Querschnitt. An den mittleren Gestellteil 21 sind stirnseitig zwei Gestellteile 22 angeschlossen, die ebenfalls sechseckigen Querschnitt haben. Die Wände der Gestellteile 22 verlaufen vom mittleren Gestellteil 21 aus konvergierend. Dadurch verringert sich der Innenquerschnitt der Gestellteile 22 vom mittleren Gestellteil 21 aus stetig. In diesen äußeren Gestellteilen 22 sind die Einstellvorrichtungen 1, 14 mittels der Verbindungsglieder 6 gelagert. Der Anstellwinkel bzw. Neigungswinkel 24 der Wände der Gestellteile 22 orientiert sich nach den Raumwinkeln 25, den die Einstellvorrichtungen 1 in der Neutralstellung des Basiskörpers 3 einnehmen. Die Gestellteile 22 weisen in den Seitenwänden Durchgangsöffnungen 50 auf, durch welche die Einstellvorrichtungen 1 in den Innenraum 19 des Rahmengestelles 2 ragen. Die Durchgangsöffnungen 50 sind in jeweils übernächsten Wänden der Gestellteile 22 vorgesehen.

Der mittlere Gestellteil 21 weist in jeweils übernächsten Wänden Öffnungen 51 auf, durch welche der Innenraum 19 des Rahmengestelles 2 von außen einsehbar ist.

Die Gestellteile 21, 22 können auch eine andere Querschnittsausbildung haben, so daß die entsprechende Einrichtung den jeweiligen Erfordernissen, insbesondere der Zahl an Einstellvorrichtungen 1, angepaßt werden kann.

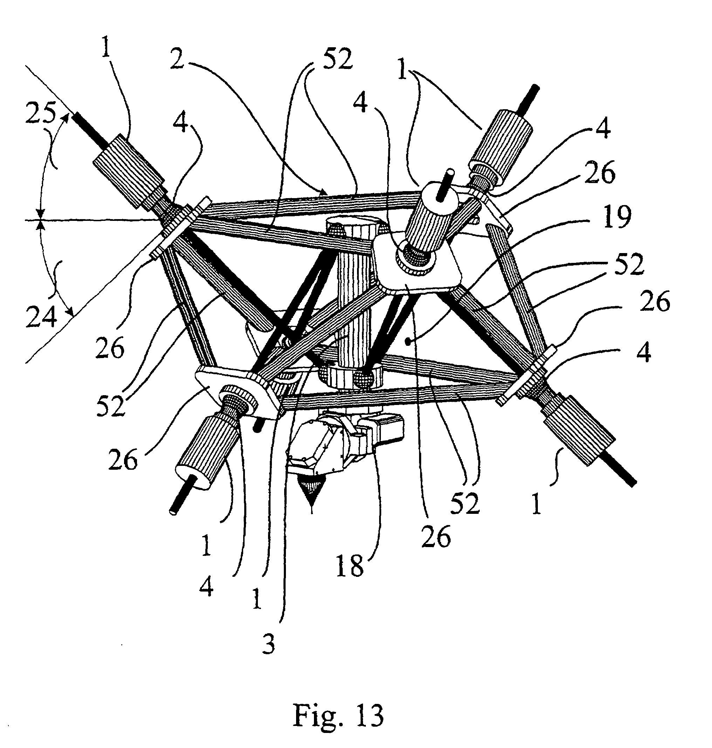

Fig. 13 zeigt ein Ausführungsbeispiel, bei dem das Rahmengestell 2 durch einzelne Streben 52 gebildet wird, welche Rahmenelemente-26 miteinander verbinden, an denen die Einstellvorrichtungen 1 gelagert sind. Die Rahmenelemente 26 sind plattenförmig ausgebildet und dienen zur Aufnahme der Verbindungsglieder 4 der Einstellvorrichtungen 1. Die Streben 52 begrenzen den Innenraum 19 des Rahmengestelles 2, in welchem der Basiskörper 3 angeordnet ist, an dem die Einstellvorrichtungen 1 in der beschriebenen Weise angelenkt sind. An dem in Fig. 13 unteren Ende des Basiskörpers 3 ist eine Einheit 18 angeschlossen. Infolge der Streben 52 und der plattenförmigen Rahmenelemente 26 hat das Rahmengestell 2 nur geringes Gewicht. Dennoch weist es eine hohe Steifigkeit auf. Die Einrichtung arbeitet im übrigen wie das Ausführungsbeispiel nach den Fig. 1 bis 4. Die Rahmenelemente 26 sind, wie dies anhand der Fig. 11 und 12 für die Gestellteile 22 beschrieben worden ist, unter einem Anstellwinkel 24 zur Horizontalebene angeordnet. Dieser Anstellwinkel richtet sich wiederum nach den Raumwinkeln 25, den die Einstelivorrichtungen 1 bei Neutralstellung des Basiskörpers 1 in bezug auf die Horizontalebene einnehmen. Insoweit liegen gleiche Verhältnisse vor wie beim Ausführungsbeispiel nach den Fig. 11 und 12.

In den beschriebenen und dargestellten Ausführungsformen ist die Einrichtung stationär angeordnet. Es ist durchaus möglich, die Einrichtung auch mobil auszubilden. So kann die Einrichtung als nicht ortsfest gebundene Bearbeitungseinheit beispielsweise in einer Fertigungsumgebung eingesetzt werden. Die Einrichtung ist in diesem Falle mit entsprechenden Schnittstellen versehen. Beispielsweise wäre die Ausführungsform gemäß Fig. 13 wegen ihrer besonderen Ausbildung des Rahmengestelles 2 vorteilhaft als mobile Einrichtung einsetzbar.

Bei sämtlichen beschriebenen und noch zu beschreibenden Ausführungsbeispielen sind die Einstellvorrichtungen 1 zur Übertragung der Zugkräfte mit den momentenfreien Verbindungsgliedern 4, 6 versehen. Mit den Antrieben 27 werden die entsprechenden Streben 37 der Einstellvorrichtungen 1 in der gewünschten Richtung verschoben.

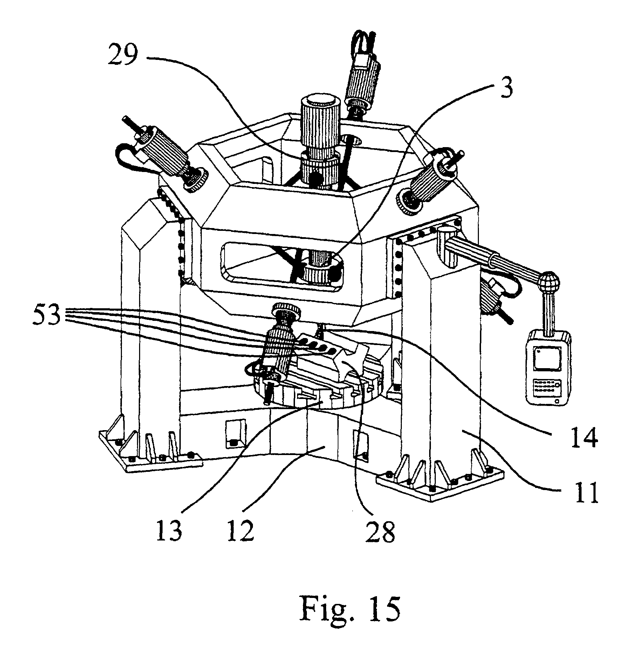

Fig. 15 zeigt die Einrichtung als Teil einer Werkzeugmaschine, in welcher Werkstücke 28 mit dem Werkzeug 14 bearbeitet werden. Das Werkstück 28 ist auf dem Werkstücktisch 13 in bekannter Weise gespannt. Das Werkzeug 14 ist als Bohrer ausgebildet, mit dem beispielsweise nebeneinander liegende Bohrungen 53 im Werkstück 28 gebohrt werden. Die Einrichtung entspricht der in Fig. 1 dargestellten Ausführungsform. Das Werkzeug 14 ist in einer Spindeleinheit 29 aufgenommen, die am Basiskörper 3 vorgesehen ist. Mittels der Spindeleinheit 29 wird das Werkzeug 14 rotierend angetrieben. Je nach erforderlicher Bearbeitung am Werkstück 28 können auch andere Werkzeuge 14 eingesetzt werden.

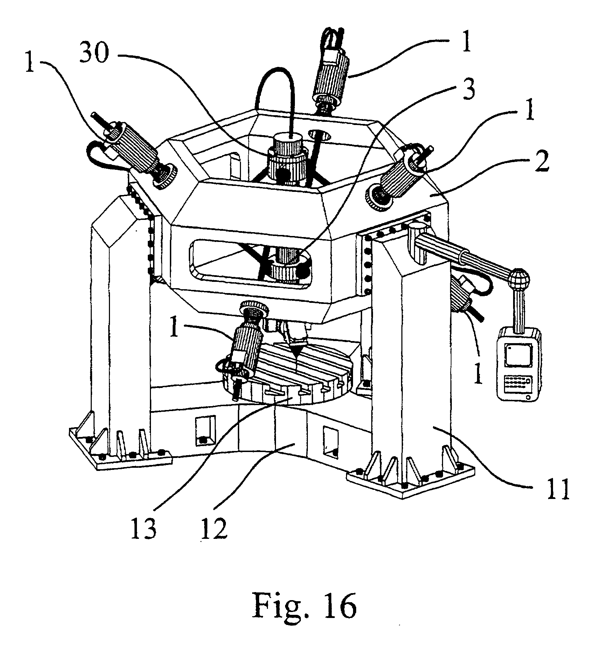

Bei der Ausführungsform gemäß Fig. 16, die bis auf die noch zu beschreibenden Unterschiede gleich ausgebildet ist wie das Ausführungsbeispiel nach Fig. 15, ist am Basiskörper 3 eine Strahlführungseinheit 30 vorgesehen, mit der ein energiereicher Strahl, insbesondere ein Laserstrahl, relativ zu einem Werkstück positioniert werden kann. Das mit dem energiereichen Strahl zu bearbeitende Werkstück wird auf dem Werkstücktisch 13 gespannt, der auf dem Träger 12 angeordnet ist. Die dargestellte Ausführungsform ist somit eine Strahlführungsmaschine, mit welcher der energiereiche Strahl relativ zum Werkstück positioniert wird. Da der Basiskörper 3 mit den Einstellvorrichtungen 1 in der beschriebenen Weise in die unterschiedlichsten Lagen und Positionen verstellt und auch längs Bewegungsbahnen bewegt werden kann, läßt sich das Werkstück mit dem energiereichen Strahl in der erforderlichen Weise präzise bearbeiten.

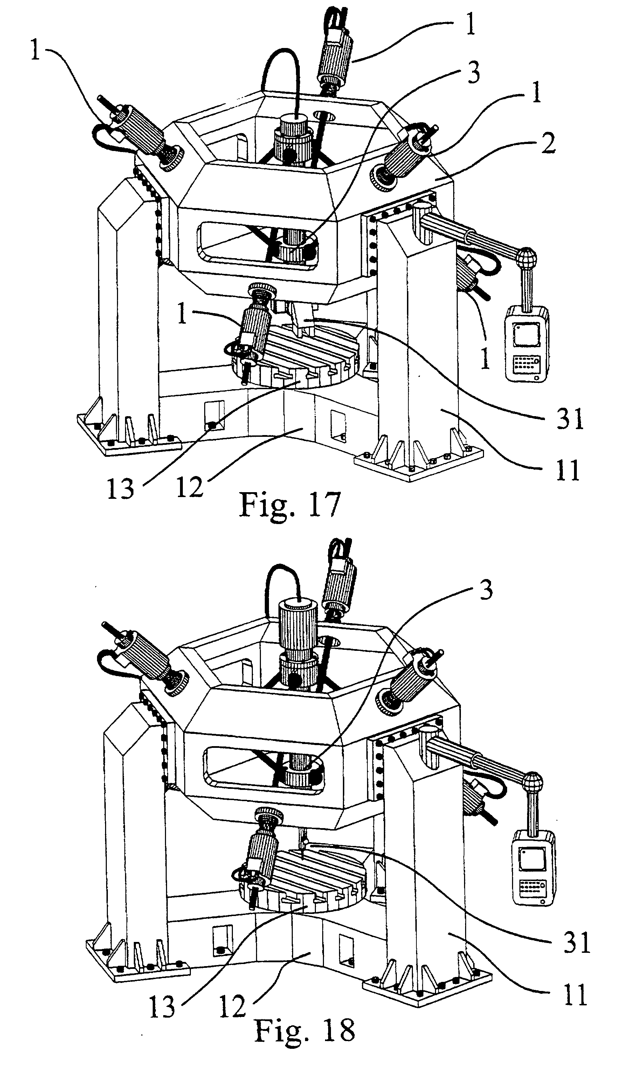

Beim Ausführungsbeispiel nach Fig. 17 ist die Einrichtung Teil einer Handhabungseinheit, mit der beispielsweise eine Montage, eine Beschichtung, Füge- und Trenntechniken, Handhabungen, Beschickungen und dergleichen durchgeführt werden können. Am Basiskörper 3 ist in diesem Falle eine Manipulatoreinheit 31 für ein auf dem Tisch 13 angeordnetes (nicht dargestelltes) Objekt vorgesehen. Der Tisch 13 bildet in diesem Falle einen Objektträgertisch, welcher das jeweilige Objekt aufnimmt. Im übrigen ist diese Einheit gleich ausgebildet wie das Ausführungsbeispiel nach den Fig. 1 bis 4. Das Rahmengestell 2 der Einrichtung ist am oberen Ende der vertikalen Säulen 11 in der beschriebenen Weise befestigt. Die Manipulatoreinheit 31 kann mit dem Basiskörper 3 und den Einstellvorrichtungen 1 im erforderlichen Maße bewegt werden.

Fig. 18 zeigt eine weitere Anwendung der Einrichtung. Am unteren Ende des Basiskörpers 3 ist eine andere Art einer Manipulatoreinheit 31 als beim vorigen Ausführungsbeispiel angeordnet. Im übrigen ist diese Ausführungsform gleich ausgebildet wie das Ausführungsbeispiel nach Fig. 17.

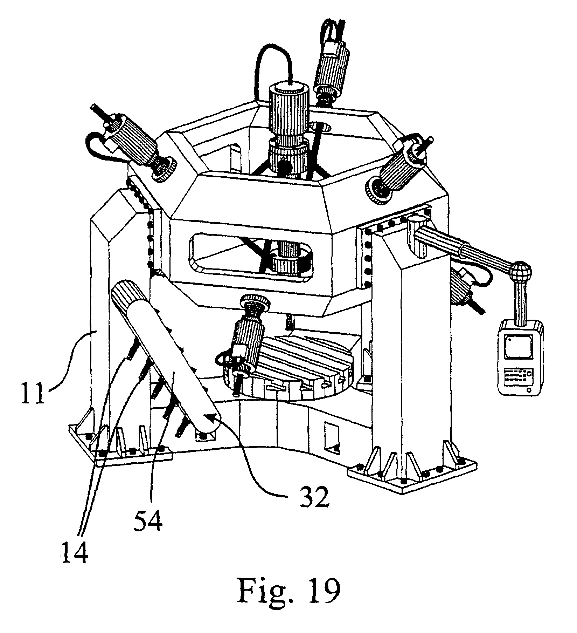

Fig. 19 zeigt die Möglichkeit, an einer Maschine, welche die Einrichtung gemaß den Fig. 1 bis 4 aufweist, ein Werkzeugwechselsystem-32 vorzusehen. Es ist an einem der vertikalen Ständer 11 angeordnet und hat ein Magazin 54, in dem die Werkzeuge 14 gelagert sind. Das Magazin 54 kann auch Bearbeitungsköpfe und/oder Meßzeuge zusätzlich oder anstelle der Werkzeuge 14 enthalten. Das Werkzeugwechselsystem 32 kann passiv oder aktiv ausgebildet sein. Bei einem passiven Werkzeugwechselsystem 32 werden die Werkzeuge 14, Bearbeitungsköpfe und/oder Meßzeuge dem Magazin 54 durch die Einrichtung selbst entnommen bzw. im Magazin abgelegt. Ist das Werkzeugwechselsystem aktiv ausgebildet, weist es einen Werkzeugwechsler auf, mit dem die Werkzeuge 14, Bearbeitungsköpfe und/oder Meßzeuge dem Magazin 54 entnommen und am Basiskörper 3 in geeigneter Weise befestigt werden. Da solche aktiven bzw. passiven Werkzeugwechselsysteme an sich bekannt sind, werden sie nicht näher beschrieben. Ein solches Werkzeugwechselsystem 32 kann auch bei den zuvor und im folgenden noch zu beschreibenden Ausführungsbeispielen vorgesehen sein. Mittels des Werkzeugwechselsystems 32 ist ein automatisierter Wechsel der Werkzeuge 14, Bearbeitungsköpfe und/oder Meßzeuge möglich.

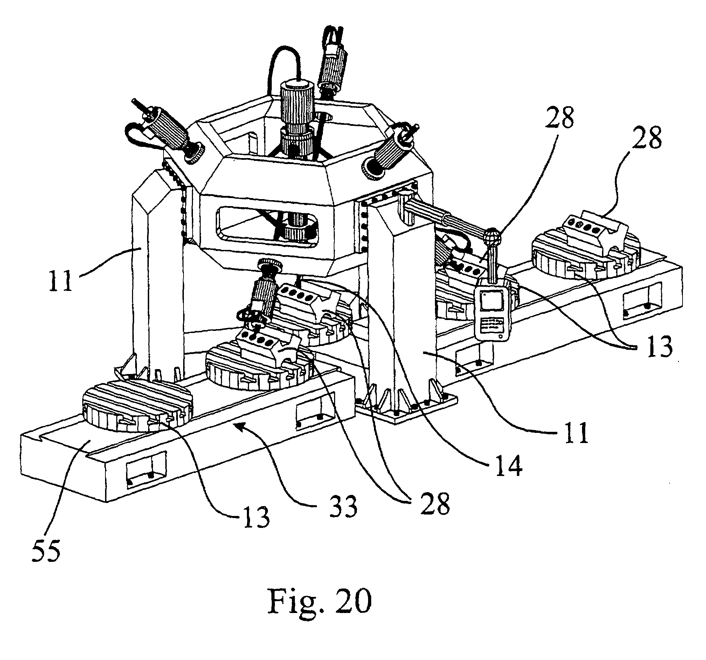

Fig. 20 zeigt ein Ausführungsbeispiel, bei dem die mit dem Werkzeug 14 der Einrichtung zu bearbeitenden Werkstücke 28 der Maschine automatisch zugeführt werden. Die Werkstücke 28 sind auf Werkstücktischen 13 gespannt, die auf einem Transportsystem 33 transportiert werden. Das Transportsystem 33 ist auf dem Untergrund in bekannter Weise montiert und in bekannter Weise ausgebildet. Es weist eine Transportbahn 55 auf, auf der die Werkstücktische 13 transportiert werden. Das Transportsystem 33 bzw. die Transportbahn 55 erstreckt sich durch die Maschine, so daß die Werkstücke 28 in den Arbeitsbereich des Werkzeuges 14 bzw. der Einrichtung gelangen. Für die Bearbeitung des Werkstückes 28 können die entsprechenden Werkstücktische 13 quer zur Transportrichtung herausbewegt werden, wenn dies zur Bearbeitung des Werkstückes 28 mittels des Werkzeuges 14 erforderlich ist. Die vertikalen Säulen 11 der Maschine befinden sich beiderseits des Transportsystems 33. Längs der Transportbahn 55 können weitere Maschinen mit entsprechenden Einrichtungen vorgesehen sein, so daß die Werkstücke 28 an den verschiedenen Maschinen unterschiedlich bearbeitet und/oder gehandhabt werden können. Die Maschine ist im dargestellten Ausführungsbeispiel gleich ausgebildet wie die Ausführungsform nach den Fig. 1 bis 4. Die Maschine kann aber auch eine Gestaltung haben, wie sie anhand der anderen Fig. erläutert worden ist.

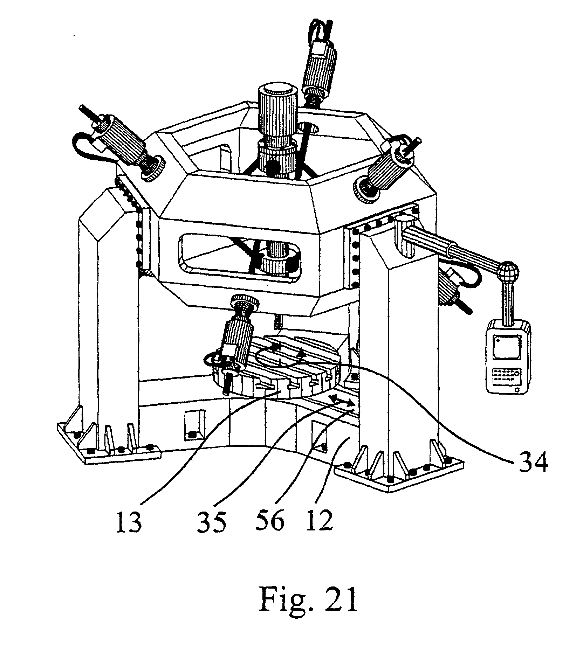

Fig. 21 zeigt die Möglichkeit, den Werkstücktisch 13 um eine vertikale Achse 34 zu drehen. Zusätzlich läßt sich der Werkstücktisch 13 in Pfeilrichtung 35 verschieben. Die Bewegungsachsen 34, 35 sind NC-Achsen, die eine genaue Verstellung des Werkstücktisches 13 ermöglichen. Der Werkstücktisch 13 kann auch eine integrierte vertikale Drehachse haben. Der Werkstücktisch 13 kann dann lediglich um diese integrierte Achse 34 drehen. Es ist aber auch möglich, weitere NC-Achsen vorzusehen, um das auf dem Werkstücktisch 13 gespannte Werkstück im gewünschten Maße bearbeiten zu können. Damit der Werkstücktisch 13 in Richtung 35 verschoben werden kann, ist der eine Arm des Trägers 12 auf seiner Oberseite mit einer entsprechenden Schiebeführung 56 für den Werkstücktisch 13 versehen. Im übrigen ist die Maschine gleich ausgebildet wie das Ausführungsbeispiel nach den Fig. 1 bis 4. Selbstverständlich kann die Maschine aber auch eine Ausbildung entsprechend den anderen dargestellten und beschriebenen Ausführungsformen haben.

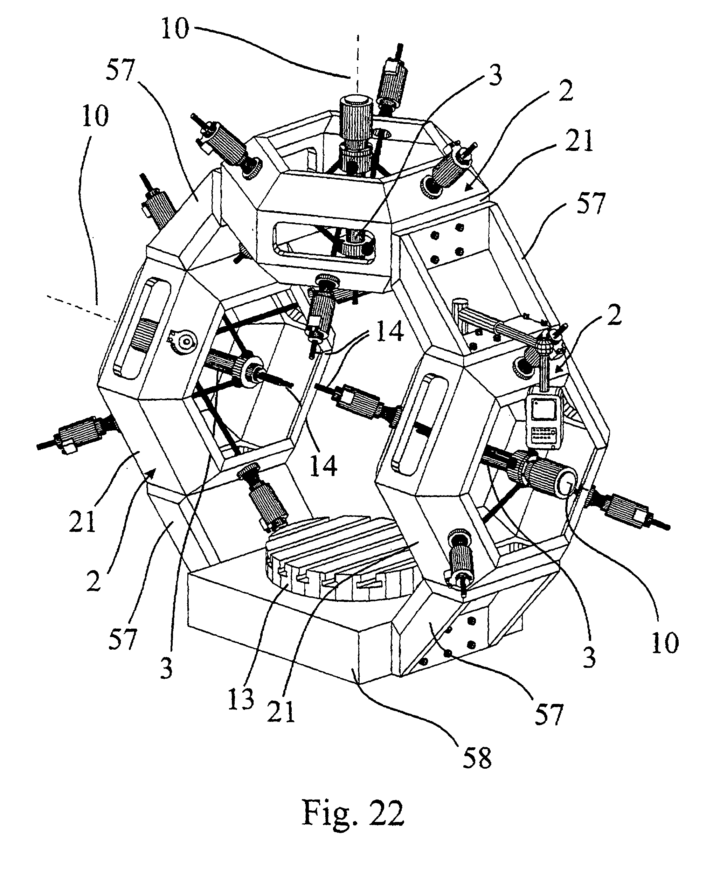

Die beschriebenen Fertigungseinrichtungen können in bezug auf die Hauptachse 10 des Basiskörpers 3 horizontal, vertikal sowie in jeder beliebigen Zwischenlage angeordnet sein. Bei den Ausführungsformen gemäß den Fig. 1 bis 4, 12, 13 und 15 bis 21 ist die Hauptachse 10 bei Neutralstellung des Basiskörpers 3 jeweils vertikal angeordnet, so daß die Rahmengestelle 2 der Einrichtungen horizontal liegen. Beim Ausführungsbeispiel nach Fig. 5 liegen die Hauptachsen 10 der beiden Basiskörper 3 in deren Meutralstellung horizontal, so daß die Rahmengestelle 2 jeweils vertikal angeordnet sind. Beim Ausführungsbeispiel nach Fig. 22 sind drei Einrichtungen vorgesehen, die jeweils gleich ausgebildet sind wie das Ausführungsbeispiel nach den Fig. 1 bis 4. Die Rahmengestelle 2 der drei Einrichtungen sind über Zwischenrahmen 57 derart miteinander verbunden, daß zwei einander gegenüberliegende Rahmengestelle 2 vertikal und das obere Rahmengestell 2 horizontal angeordnet sind. Sämtliche Rahmengestelle 2 haben eine gemeinsame Vertikalebene. In der Neutralstellung der Basiskörper 3 der Einrichtungen liegen die Hauptachsen 10 in dieser Vertikalebene. Die Hauptachsen 10 der einander gegenüberliegenden Einrichtungen liegen fluchtend zueinander und horizontal, während die Hauptachse 10 der oberen Einrichtung hierzu vertikal verläuft. Benachbarte Rahmengestelle 2 liegen im dargestellten Ausführungsbeispiel senkrecht zueinander. Die Zwischenrahmen 57 liegen in diesem Falle jeweils unter 45° zu den jeweiligen Rahmengestellen 2. Die Zwischenrahmen 57 sind an den mittleren Gestellteilen 21 der Rahmengestelle 2 befestigt. Die Maschine ist über ein Gestell 58, auf dem der Werkstücktisch 13 angeordnet ist, auf dem Untergrund abgestützt. Die beiden vertikalen Rahmengestelle 2 sind über jeweils einen Zwischenrahmen 57 mit dem Gestell 58 verbunden. Da jede Einrichtung jeweils ein Werkzeug 14 antreibt, kann das auf dem Werkstücktisch 13 aufgespannte Werkstück beispielsweise von drei Seiten mit den Werkzeugen 14 bearbeitet werden. Die Basiskörper 3 der drei Einrichtungen können unabhängig voneinander gesteuert werden, so daß mit den drei Werkzeugen 14 gleichzeitig unterschiedliche Bearbeitungen und/oder Bewegungen durchgeführt werden können. Die Einrichtungen sind im dargestellten Ausführungsbeispiel gleich ausgebildet wie die Ausführungsform gemäß den Fig. 1 bis 4. Die Einrichtungen können aber auch eine Ausbildung haben, wie sie anhand.der weiteren Figuren beschrieben worden ist.

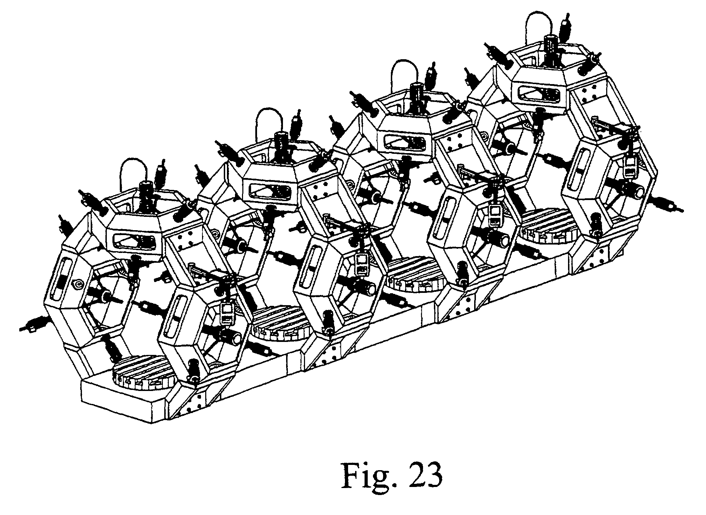

Fig. 23 zeigt die Möglichkeit, mehrere Maschinen entsprechend Fig. 22 beispielsweise horizontal hintereinander anzuordnen. Im dargestellten Ausführungsbeispiel sind beispielhaft vier solcher Maschinen hintereinander angeordnet. Während die Maschine nach Fig. 22 als Einzelmaschine arbeitet, können wenigstens zwei, im dargestellten Ausführungsbeispiel vier solcher Maschinen als Fertigungslinie bzw. Fertigungsfläche angeordnet sein. Die einzelnen Maschinen können miteinander verkettet oder als stand-alone-Maschinen betrieben werden. Diese Maschinen können zu Transfersystemen oder Takt- bzw. Durchlaufsystemen ausgebaut werden. Auch ist es möglich, diese Maschinen als flexible Fertigungssysteme (FFS) auszubilden.

Die in den Fig. 22 und 23 dargestellten Maschinen können zueinander horizontal und/oder vertikal oder einander gegenüberliegend sowie auch in jeder beliebigen Raumlage angeordnet sein. Die Fig. 22 und 23 zeigen in dieser Hinsicht lediglich Ausführungsbeispiele.

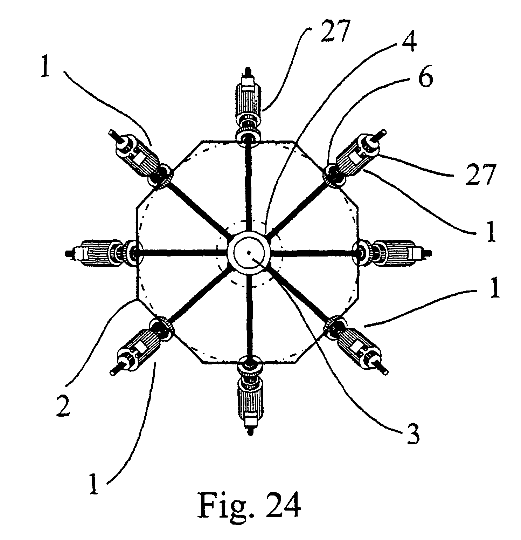

Bei der Ausführungsform gemäß Fig. 24 sind mehr als drei Einstellvorrichtungen 1 über ihre Verbindungsglieder 4 an umfangsseitig verteilt angeordneten Krafteinleitungsstellen am Basiskörper 3 angekoppelt. Die Einstellvorrichtungen 1 sind außerdem über die Verbindungsglieder 6 an umfangsseitig verteilt angeordneten Krafteinleitungsstellen am Rahmengestell 2 angekoppelt, das nur schematisch dargestellt ist. Im Unterschied zu den vorigen Ausführungsbeispielen hat das Rahmengestell 2 die Form eines regelmäßigen Achteckes. Insgesamt sind acht Einstellvorrichtungen 1 vorgesehen, die sich längs der Seiten eines gedachten mehrseitigen pyramidenförmigen Körpers erstrecken. Von den Antrieben 27 aus sind vier Einstellvorrichtungen 1 in der Neutralstellung des Basiskörpers 3 schräg nach unten und die anderen vier Einstellvorrichtungen vom Antrieb 27 aus schräg nach oben verlaufend angeordnet. Diese Positionierung der Einstellvorrichtungen 1 bezieht sich auf eine horizontale Lage des Rahmengestelles 2. Im übrigen ist die Einrichtung gemäß Fig. 24 gleich ausgebildet wie das Ausführungsbeispiel nach den Fig. 1 bis 4. Selbstverständlich kann die Einrichtung nach Fig. 24 auch Ausbildungen haben, wie sie anhand der weiteren Ausführungsformen erläutert worden sind. Das Rahmengestell 2 hat - bis auf die Achteckform - vorteilhaft eine Ausbildung, wie sie anhand der Fig. 11 und 12 erläutert worden ist.

Die Einrichtungen werden als Fertigungs- und Handhabungseinrichtungen eingesetzt. Wie anhand von Fig. 16 beispielhaft erläutert worden ist, kann die Einrichtung auch als Meßeinrichtung eingesetzt werden.

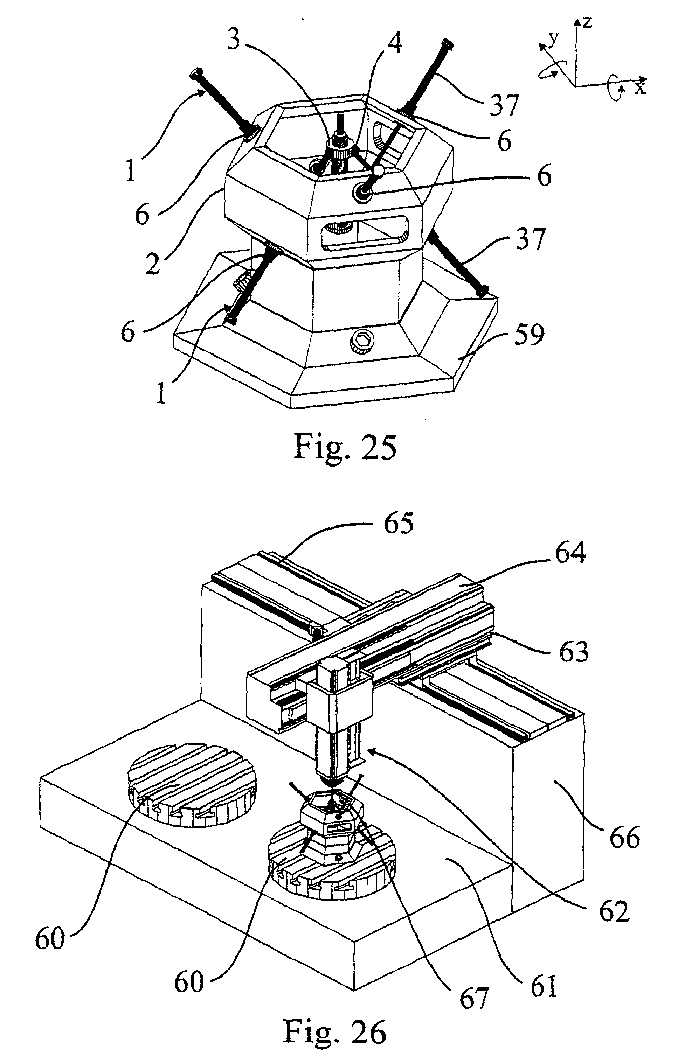

Die Fig. 25 und 26 zeigen eine Einrichtung, die als Meßeinrichtung ausgebildet ist und zur Bahn- und Positionsmessung des Basiskörpers 3 herangezogen wird. Er ist innerhalb des Rahmengestelles 2 angeordnet und hat wenigstens eine Aufnahme in Form eines Dorns, einer Werkzeugschnittstelle oder dergleichen. Solche Dorne, Werkzeugschnittstellen oder dergleichen sind an den Basiskörpern der zuvor beschriebenen Ausführungsbeispiele in gleicher Weise vorhanden. Das Rahmengestell 2 ist gleich ausgebildet wie beim Ausführungsbeispiel nach den Fig. 1 bis 4. Am Basiskörper 3 greifen über die Verbindungsglieder 4 die Vorrichtungen 1 gelenkig an, wie dies anhand der vorigen Ausführungsbeispiele erläutert worden ist. Die Vorrichtungen 1 sind außerdem über die Verbindungsglieder 6 in der beschriebenen Weise am Rahmengestell 2 angekoppelt. Die Vorrichtungen 1 haben die Streben 37, die in der beschriebenen Weise axial verschoben werden können, wodurch ihre wirksame Länge zwischen dem Basiskörper 3 und dem Rahmengestell 2 verlängert oder verkürzt werden kann. Jede Vorrichtung 1 ist über das Verbindungsglied 4 relativ zum Basiskörper 3 frei schwenkbar. Über die Verbindungsglieder 6 sind die Vorrichtungen 1 außerdem relativ zum Rahmengestell 2 frei schwenkbar.

Das Rahmengestell 2 sitzt auf einer Tragvorrichtung 59, mit der die Einrichtung beispielsweise auf einem Tisch 60 (Fig. 26) mittels einer (nicht dargestellten) Aufspannvorrichtung montiert werden kann. Im Ausführungsbeispiel nach Fig. 26 sind zwei nebeneinander liegende Tische 60 vorgesehen, die auf einem Bett 61 angeordnet sind.

Um die Position und/oder die Bahnbewegung des Basiskörpers 3 messen zu können, ist eine Meßeinrichtung 62 vorgesehen, mit welcher die wirksamen Längen der Streben 37 der Vorrichtungen 1, gemessen zwischen den Verbindungsgliedern 4 am Basiskörper 3 und dem Rahmengestell 2, erfaßt werden. Die Streben 37 der Vorrichtungen 1 stehen in der beschriebenen Weise in ihrer Längsrichtung unter einer definierten Zugbelastung, so daß die Position des Basiskörpers 3 relativ zum Rahmengestell 2 über die entsprechenden gemessenen Längen der Streben 37 der Vorrichtungen 1 räumlich mit bis zu sechs Freiheitsgraden mit hoher Genauigkeit berechnet werden kann. Die Meßeinrichtung 62 ist in z-Richtung stufenlos verstellbar in einer Führung 63 gelagert. Sie ist in y-Richtung längs eines Schlittens 64 verfahrbar, der seinerseits auf einer in x-Richtung sich erstreckenden Führungsbahn 65 verstellbar ist. Sie befindet sich auf der Oberseite eines senkrechten Gestellteiles 66, das an das Bett 61 anschließt. Die Meßeinrichtung 62 läßt sich somit in jede Lage bezüglich der Einrichtung bzw. deren Basiskörper 3 einstellen, so daß die Längen der Streben 37 der Vorrichtungen 1 einfach und genau gemessen werden können. Die Meßeinrichtung 62 ist mit einem entsprechenden Meßelement 67 versehen.

## Patentansprüche

1. Einrichtung für numerisch gesteuerte Fertigungs-, Handhabungs- oder Meßeinrichtungen, mit mindestens einer Bewegungseinheit (3), an der ein erster Teil von wenigstens drei Einstellvorrichtungen (1) mit an eine Steuerung angeschlossenen Antrieben (27) über erste Verbindungsglieder (4) an umfangsseitig verteilt angeordneten Krafteinleitungsstellen angekoppelt ist, die in einer ersten gedachten Ankopplungsebene (5) der Bewegungseinheit (3) liegen, wobei die Einstellvorrichtungen (1) jeweils eine Strebe (37) haben, die durch Betätigung des Antriebes (27) verschiebbar ist, wobei der erste Teil der Einstellvorrichtungen (1) über zweite Verbindungsglieder (6), die mit Abstand zu den ersten Verbindungsgliedern (4) vorgesehen sind, an umfangsseitig verteilt angeordneten Krafteinleitungsstellen am Gestell (2) angekoppelt sind, die in einer ersten gedachten Ankopplungsebene (7) des Gestelles (2) liegen,
wobei ein zweiter Teil der Einstellvorrichtungen (1) an der Bewegungseinheit (3) über die ersten Verbindungsglieder (4) angekoppelt ist, die in einer zweiten gedachten Ankopplungsebene (8) der Bewegungseinheit liegen,
wobei der zweite Teil der Einstellvorrichtungen (1) am Gestell (2) über die zweiten Verbindungsglieder (6) angekoppelt ist, die in einer zweiten gedachten Ankopplungsebene (9) des Gestelles (2) liegen,
wobei jede Einstellvorrichtung (1) über die Verbindungsglieder (4, 6) so gelenkig mit der Bewegungseinheit (3) und dem Gestell (2) verbunden ist, daß eine freie Schwenkbewegung der Einstellvorrichtung (1) im Verhältnis zur Bewegungseinheit (3) und zum Gestell (2) möglich ist, wobei zumindest eine der zweiten Ankopplungsebenen (8, 9) einen festen Abstand zur jeweils ersten Ankopplungsebene (5, 7) aufweist, derart, daß durch Verkürzung und Verlängerung des Abstandes zwischen den jeweils zugehörigen Verbindungsgliedern (4, 6) Bahnbewegungen der Bewegungseinheit (3) ausführbar sind und die Streben (37) durch entsprechend berechnete und eingestellte Verkürzungen und Verlängerungen stets unter definierter Belastung stehen.

2. Einrichtung nach Anspruch 1,
**dadurch gekennzeichnet, daß** sich der erste Teil den Einstellvorrichtungen (1) längs der Seiten eines gedachten Tetraeders bis zu den zweiten Verbindungsgliedern (6) erstreckt.

3. Einrichtung nach Anspruch 1 oder 2,
**dadurch gekennzeichnet, daß** sich der zweite Teil der Einstellvorrichtungen (1) längs der Seiten eines weiteren gedachten Tetraeders bis zu den zweiten Verbindungsgliedern (6) erstreckt.

4. Einrichtung nach einem der Ansprüche 1 bis 3,
**dadurch gekennzeichnet, daß** die zweiten gedachten Ankopplungsebenen (8, 9) der Bewegungseinheit (3) und des Gestelles (2) gegen die ersten gedachten Ankopplungsebenen (5, 7) der Bewegungseinheit (3) und des Gestelles (2) winkelverdreht vorgesehen sind.

5. Einrichtung nach einem der Ansprüche 1 bis 4,
**dadurch gekennzeichnet, daß** die ersten Verbindungsglieder (4) an der Bewegungseinheit (3) einen Winkelabstand von 120° voneinander haben, und daß vorzugsweise die zweiten Verbindungsglieder (6) am Gestell (2) einen Winkelabstand von 120° voneinander haben.

6. Einrichtung nach Anspruch 4 oder 5,
**dadurch gekennzeichnet, daß** die zweiten gedachten Ankopplungsebenen (8, 9) der Bewegungseinheit (3) und des Gestelles (2) gegenüber den ersten gedachten Ankopplungsebenen (5, 7) der Bewegungseinheit (3) und des Gestelles (2) eine Winkelverdrehung von 60° um eine Hauptachse (10) der Bewegungseinheit (3) aufweisen.

7. Einrichtung nach einem der Ansprüche 1 bis 6,
**dadurch gekennzeichnet, daß** die zweite gedachte Ankopplungsebene (9) am Gestell (2) einen festen Abstand zur ersten gedachten Ankopplungsebene (7) des Gestelles (2) aufweist.

8. Einrichtung nach einem der Ansprüche 1 bis 6,
**dadurch gekennzeichnet, daß** die erste und die zweite gedachte Ankopplungsebene (7, 9) am Gestell (2) zusammenfallen.

9. Einrichtung nach einem der Ansprüche 1 bis 8,
**dadurch gekennzeichnet, daß** die erste gedachte Ankopplungsebene (5) der Bewegungseinheit (3) einen festen Abstand zur zweiten gedachten Ankopplungsebene (8) der Bewegungseinheit (3) aufweist.

10. Einrichtung nach einem der Ansprüche 1 bis 7,
**dadurch gekennzeichnet, daß** die erste und die zweite gedachte Ankopplungsebene (5, 8) der Bewegungseinheit (3) zusammenfallen.

11. Einrichtung nach einem der Ansprüche 1 bis 10,
**dadurch gekennzeichnet, daß** eine zusätzliche Einstellvorrichtung (15) zur Momentenabstützung der Bewegungseinheit (3) über ein erstes Verbindungsglied (4) umfangsseitig an der Bewegungseinheit (3) angekoppelt und über ein zweites Verbindungsglied (6) am Gestell (2) angelenkt ist.

12. Einrichtung nach einem der Ansprüche 1 bis 11,
**dadurch gekennzeichnet, daß** die Bewegungseinheit (3) Schnittstellen (16) zur Aufnahme von Werkzeugen (14), Operatoren (17), Einheiten (18), Manipulatoren (31) und dergleichen aufweist, und daß vorteilhaft an der Bewegungseinheit (3) zusätzliche Achseinheiten (18) angeordnet sind.

13. Einrichtung nach einem der Ansprüche 1 bis 12,
**dadurch gekennzeichnet, daß** das Gestell (2) als Rahmen ausgebildet ist.

14. Einrichtung nach einem der Ansprüche 1 bis 13,
**dadurch gekennzeichnet, daß** das Gestell (2) mehreckigen Querschnitt aufweist.

15. Einrichtung nach einem der Ansprüche 1 bis 14,
**dadurch gekennzeichnet, daß** das Gestell (2) einen Gestellteil (21) aufweist, an den stimseitig mindestens ein weiterer Gestellteil (22) angeschlossen ist, das vorzugsweise einen in Richtung auf die freie Stirnseite sich verjüngenden Querschnitt hat, und daß vorzugsweise am weiteren Gestellteil (22) die zweiten Verbindungsglieder (6) der Einstellvorrichtungen (1) gelagert sind.

16. Einrichtung nach Anspruch 15,
**dadurch gekennzeichnet, daß** der durch die Querschnittsverjüngung bestimmte Anstellwinkel (24) des weiteren Gestellteiles (22) in Abhängigkeit vom Raumwinkel (25) der Einstellvorrichtungen (1) bei Neutralstellung der Bewegungseinheit (3) gewählt ist.

17. Einrichtung nach einem der Ansprüche 1 bis 16,
**dadurch gekennzeichnet, daß** das Gestell (2) einen Innenraum (19) umschließt, in dem zumindest teilweise die Bewegungseinheit (3) liegt.

18. Einrichtung nach einem der Ansprüche 1 bis 17,
**dadurch gekennzeichnet, daß** die Einrichtung als mobile Einrichtung ausgebildet ist, die mit Schnittstellen zur Steuerung/Regelung zumindest der Einstellvorrichtungen (1) und der Bewegungseinheit (3) versehen ist.

19. Einrichtung nach einem der Ansprüche 1 bis 18,
**dadurch gekennzeichnet, daß** die ersten und/oder zweiten Verbindungsglieder (4, 6) momentenfrei, vorzugsweise als Kugelelemente oder Kardangelenke, ausgebildet sind.

20. Einrichtung nach einem der Ansprüche 1 bis 19,
**dadurch gekennzeichnet, daß** die Strebe (37) der Einstellvorrichtung (1) mittels des Antriebes (27) in ihrer Längsrichtung relativ zum Gestell (2) verschiebbar ist, und daß vorzugsweise der Antrieb (27) am Gestell (2) gelagert ist und vorteilhaft mechanisch, elektromechanisch, hydraulisch oder pneumatisch arbeitet.

21. Einrichtung nach einem der Ansprüche 1 bis 20,
**dadurch gekennzeichnet, daß** an der Bewegungseinheit (3) eine Spindeleinheit (29) vorgesehen ist, die vorzugsweise eine Aufnahme für das Werkzeug (14) aufweist.

22. Einrichtung nach einem der Ansprüche 1 bis 21,
**dadurch gekennzeichnet, daß** an der Bewegungseinheit (3) eine Strahlführungseinheit (30) zur Positionierung eines energiereichen Strahles, vorzugsweise eines Laserstrahles, vorgesehen ist.

23. Einrichtung nach einem der Ansprüche 1 bis 22,
**dadurch gekennzeichnet, daß** der Einrichtung wenigstens ein Tisch (13) zur Aufnahme eines Werkstückes (28), eines Objektes und dergleichen zugeordnet ist, der vorteilhaft auf einem Grundgestell (11, 12) gelagert ist.

24. Einrichtung nach Anspruch 23,
**dadurch gekennzeichnet, daß** die Einrichtung von Säulen (11) des Grundgestelles (11, 12) getragen ist, und daß vorzugsweise am Grundgestell (11, 12) wenigstens ein Magazin (54) für Werkzeuge (14), Werkzeugköpfe, Meßzeuge und dergleichen vorgesehen ist, dem vorzugsweise ein Wechsler zugeordnet ist.

25. Einrichtung nach Anspruch 23 oder 24,
**dadurch gekennzeichnet, daß** der Tisch (13) um wenigstens eine Achse (34) drehbar ist, die vorteilhaft in den Tisch (13) integriert ist.

26. Einrichtung nach einem der Ansprüche 23 bis 25,
**dadurch gekennzeichnet, daß** der Tisch (13) wenigstens eine NC-Achse (35) aufweist.

27. Einrichtung nach einem der Ansprüche 1 bis 26,
**dadurch gekennzeichnet, daß** die Einrichtung im Zuführbereich wenigstens eines Transportsystems (33) liegt.

28. Einrichtung nach einem der Ansprüche 1 bis 27,
**dadurch gekennzeichnet, daß** das Gestell (2) horizontal angeordnet ist.

29. Einrichtung nach einem der Ansprüche 1 bis 28,
**dadurch gekennzeichnet, daß** das Gestell (2) unter einem Winkel zur Horizontalen angeordnet ist.

30. Einrichtung nach einem der Ansprüche 1 bis 29,
**dadurch gekennzeichnet, daß** wenigstens zwei Einrichtungen miteinander verbunden sind, die vorzugsweise durch Zwischenträger (57), vorzugsweise Zwischenrahmen, miteinander verbunden sind, die vorteilhaft die Gestelle (2) benachbarter Einrichtungen miteinander verbinden.

31. Einrichtung nach einem der Ansprüche 1 bis 30,
**dadurch gekennzeichnet, daß** wenigstens zwei Einrichtungen mit einem Unterbau (58) verbunden sind, der vorzugsweise über weitere Zwischenträger (57) mit den Gestellen (2) der Einrichtungen verbunden ist.

32. Einrichtung nach Anspruch 30 oder 31,
**dadurch gekennzeichnet, daß** wenigstens zwei Einheiten, die jeweils aus mindestens zwei Einrichtungen gebildet sind, miteinander verkettet sind.

33. Einrichtung nach einem der Ansprüche 1 bis 32,
**dadurch gekennzeichnet, daß** der Einrichtung wenigstens eine Meßeinrichtung (62) zugeordnet ist, mit der die Position der Bewegungseinheit (3) bei Stillstand und bei Bahnbewegungen erfaßbar ist.

## Claims

1. A device for numerically controlled manufacturing, manipulation or measuring devices, having at least one movement unit (3) to which a first part of at least three adjustment devices (1) with drives (27) attached to a control device is coupled at force-introduction points arranged distributed over the periphery by way of first connecting members (4), the force-introduction points being situated in a first imaginary coupling plane (5) of the movement unit (3), wherein the adjustment devices (1) each have a respective brace (37) which is displaceable by actuation of the drive (27),
wherein the first part of the adjustment devices (1) [is] coupled to the stand (2) at force-introduction points arranged distributed over the periphery by way of second connecting members (6) provided at a distance from the first connecting members (4), the force-introduction points being situated in a first imaginary coupling plane (7) of the stand (2),
wherein a second part of the adjustment devices (1) is coupled to the movement unit (3) by way of the first connecting members (4) which are situated in a second imaginary coupling plane (8) of the movement unit,
wherein the second part of the adjustment devices (1) is coupled to the stand (2) by way of the second connecting members (6) which are situated in a second imaginary coupling plane (9) of the stand (2),
wherein each adjustment device (1) is connected in an articulated manner to the movement unit (3) and the stand (2) by way of the connecting members (4, 6) in such a way that a free pivoting movement of the adjustment device (1) in relation to the movement unit (3) and the stand (2) is possible, wherein at least one of the second coupling planes (8, 9) is at a fixed distance from the respective first coupling plane (5, 7) in such a way that path movements of the movement unit (3) can be performed by shortening and lengthening the distance between the respectively associated connecting members (4, 6), and the braces (37) are always under a defined load by shortenings and lengthenings calculated and adjusted accordingly.

2. A device according to Claim 1, **characterized in that** the first part of the adjustment devices (1) extends along the sides of an imaginary tetrahedron as far as the second connecting members (6).

3. A device according to Claim 1 or 2, **characterized in that** the second part of the adjustment devices (1) extends along the sides of a further imaginary tetrahedron as far as the second connecting members (6).

4. A device according to one of Claims 1 to 3, **characterized in that** the second imaginary coupling planes (8, 9) of the movement unit (3) and the stand (2) are provided rotated at an angle with respect to the first imaginary coupling planes (5, 7) of the movement unit (3) and the stand (2).

5. A device according to one of Claims 1 to 4, **characterized in that** the first connecting members (4) on the movement unit (3) are at an angular distance of 120° from one another, and the second connecting members (6) on the stand (2) are preferably at an angular distance of 120° from one another.

6. A device according to Claim 4 or 5, **characterized in that** the second imaginary coupling planes (8, 9) of the movement unit (3) and the stand (2) have an angular rotation of 60° about a main axis (10) of the movement unit (3) with respect to the first imaginary coupling planes (5, 7) of the movement unit (3) and the stand (2).

7. A device according to one of Claims 1 to 6, **characterized in that** the second imaginary coupling plane (9) on the stand (2) is at a fixed distance from the first imaginary coupling plane (7) of the stand (2).

8. A device according to one of Claims 1 to 6, **characterized in that** the first and the second imaginary coupling plane (7, 9) on the stand (2) coincide.

9. A device according to one of Claims 1 to 8, **characterized in that** the first imaginary coupling plane (5) of the movement unit (3) is at a fixed distance from the second imaginary coupling plane (8) of the movement unit (3).

10. A device according to one of Claims 1 to 7, **characterized in that** the first and the second imaginary coupling plane (5, 8) of the movement unit (3) coincide.

11. A device according to one of Claims 1 to 10, **characterized in that** an additional adjustment device (15) for supporting the moment of the movement unit (3) is coupled at the periphery to the movement unit (3) by way of a first connecting member (4) and is articulated to the stand (2) by way of a second connecting member (6).

12. A device according to one of Claims 1 to 11, **characterized in that** the movement unit (3) has interfaces (16) for receiving tools (14), operator means (17), units (18), manipulator means (31) and the like, and additional axial units (18) are advantageously arranged on the movement unit (3).

13. A device according to one of Claims 1 to 12, **characterized in that** the stand (2) is designed in the form of a frame.

14. A device according to one of Claims 1 to 13, **characterized in that** the stand (2) has a polygonal cross-section.

15. A device according to one of Claims 1 to 14, **characterized in that** the stand (2) has a part (21) to which at least one further stand part (22), which preferably has a cross-section tapering in the direction towards the free end face, is attached at the end face, and the second connecting members (6) of the adjustment devices (1) are preferably mounted on the further stand part (22).

16. A device according to Claim 15, **characterized in that** the adjustment angle (24) - determined by the cross-sectional taper - of the further stand part (22) is selected in accordance with the solid angle (25) of the adjustment devices (1) in the neutral position of the movement unit (3).

17. A device according to one of Claims 1 to 16, **characterized in that** the stand (2) surrounds an interior (19) in which the movement unit (3) is situated at least in part.

18. A device according to one of Claims 1 to 17, **characterized in that** the device is designed in the form of a mobile device which is provided with interfaces for controlling/ regulating at least the adjustment devices (1) and the movement unit (3).

19. A device according to one of Claims 1 to 18, **characterized in that** the first and/or second connecting members (4, 6) are designed so as to be free of moment, preferably in the form of ball members or universal joints.

20. A device according to one of Claims 1 to 19, **characterized in that** the brace (37) of the adjustment device (1) is displaceable in its longitudinal direction relative to the stand (2) by means of the drive (27), and the drive (27) is preferably mounted on the stand (2) and advantageously operates mechanically, electromechanically, hydraulically or pneumatically.

21. A device according to one of Claims 1 to 20, **characterized in that** a spindle unit (29), which preferably has a receiving means for the tool (14), is provided on the movement unit (3).

22. A device according to one of Claims 1 to 21, **characterized in that** a beam-control unit (30) for positioning a high-energy beam, preferably a laser beam, is provided on the movement unit (3).

23. A device according to one of Claims 1 to 22, **characterized in that** at least one bench (13) for receiving a workpiece (28), an object and the like is associated with the device, and is advantageously mounted on a main stand (11, 12).

24. A device according to Claim 23, **characterized in that** the device is supported by columns (11) of the main stand (11, 12), and at least one magazine (54) for tools (14), tool heads, measuring tool and the like is preferably provided on the main stand (11, 12), and a changer is preferably associated with the said magazine (54).

25. A device according to Claim 23 or 24, **characterized in that** the bench (13) is rotatable about at least one axis (34) which is advantageously integrated in the bench (13).

26. A device according to one of Claims 23 to 25, **characterized in that** the bench (13) has at least one numerically controlled axis (35).

27. A device according to one of Claims 1 to 26, **characterized in that** the device is situated in the feed area of at least one conveying system (33).

28. A device according to one of Claims 1 to 27, **characterized in that** the stand (2) is arranged horizontally.

29. A device according to one of Claims 1 to 28, **characterized in that** the stand (2) is arranged at an angle to the horizontal.

30. A device according to one of Claims 1 to 29, **characterized in that** at least two devices are connected to each other, which are preferably connected to each other by intermediate supports (57), preferably intermediate frames, which advantageously connect the stands (2) of adjacent devices to one another.

31. A device according to one of Claims 1 to 30, **characterized in that** at least two devices are connected to a substructure (58) which is preferably connected to the stands (2) of the devices by way of further intermediate supports (57).

32. A device according to Claim 30 or 31, **characterized in that** at least two units, which are each formed by at least two devices, are chained to each other.

33. A device according to one of Claims 1 to 32, **characterized in that** at least one measuring device (62), by which the position of the movement unit (3) can be detected in the stopped state and during path movements, is associated with the device.

## Revendications

1. Dispositif pour des appareils de fabrication, de manipulation ou de mesure à commande numérique, comportant au moins une unité de déplacement (3), dans laquelle une première partie d'au moins trois dispositifs de réglage (1) est couplée à des dispositifs d'entraînement (37) raccordés à l'unité de commande, par l'intermédiaire d'organes de liaison (4) en des emplacements d'application de force, répartis sur la périphérie et qui sont situés dans un premier plan de couplage imaginaire (5) de l'unité de déplacement (3), et dans lequel les dispositifs de réglage (1) comportent respectivement une entretoise (37), qui est déplaçable au moyen de l'actionnement du dispositif d'entraînement (27), et
dans lequel la première partie des dispositifs de réglage (1) est couplée par l'intermédiaire de seconds organes de liaison (6), qui sont prévus à distance des premiers organes de liaison (4), à des emplacements d'application de force répartis sur la périphérie du châssis (2) et qui sont disposés dans un plan de couplage imaginaire (7) du châssis (2), et
dans lequel une seconde partie des dispositifs de réglage (1) est couplée à l'unité de déplacement (3) par l'intermédiaire des premiers organes de liaison (4), qui sont situés dans un second plan de couplage imaginaire (8) de l'unité de déplacement, et
dans lequel la seconde partie des dispositifs de réglage (1) est couplée au châssis (2) par l'intermédiaire des seconds organes de liaison (6), qui sont situés dans un second plan de couplage imaginaire (9) du châssis (2), et dans lequel chaque dispositif de réglage (1) est relié d'une manière articulée, par l'intermédiaire des organes de liaison (4, 6), à l'unité de déplacement (3) et au châssis (2) de telle sorte qu'un mouvement de pivotement libre du dispositif de réglage (1) est possible par rapport à l'unité de déplacement (3) et au châssis (2), et dans lequel au moins l'un des deux plans de couplage (8, 9) est séparé par une distance fixe du premier plan de couplage respectif (5, 7) de telle sorte que des déplacements de trajectoire de l'unité de déplacement (3) peuvent être exécutés par raccourcissement et par allongement de la distance entre les organes de liaison respectivement associés (4, 6), et les entretoises (37) sont placées en permanence sous une contrainte définie, sous l'effet de raccourcissements et d'allongements calculés et réglés de façon correspondante.

2. Dispositif selon la revendication 1, **caractérisé en ce que** la première partie des dispositifs de réglage (1) s'étend le long des côtés d'un tétraèdre imaginaire, jusqu'aux seconds organes de liaison (6).

3. Dispositif selon la revendication 1 ou 2, **caractérisé en ce que** la seconde partie des dispositifs de réglage (1) s'étend le long des côtés d'un autre tétraèdre imaginaire, jusqu'aux seconds organes de liaison (6).

4. Dispositif selon l'une des revendications 1 à 3, **caractérisé en ce que** les seconds plans de couplage imaginaires (8, 9) de l'unité de déplacement (3) et du châssis (2) sont prévus dans une position pivotée angulairement par rapport au premier plan de couplage imaginaire (5, 7) de l'unité de déplacement (3).

5. Dispositif selon l'une des revendications 1 à 5, **caractérisé en ce que** les premiers organes de liaison (4) situés sur l'unité de déplacement (3) sont séparés les uns des autres par une distance angulaire de 120° et que de préférence les seconds organes de liaison (6) situés sur le châssis (2) sont séparés les uns des autres par une distance angulaire de 120°.

6. Dispositif selon la revendication 4 ou 5, **caractérisé en ce que** les seconds plans de couplage imaginaires (8, 9) de l'unité de déplacement (3) et du châssis (2) font par rapport aux premiers plans imaginaires de couplage (5, 7) de l'unité de déplacement (3) et du châssis (2), un angle de 60° autour d'un axe principal (10) de l'unité de déplacement (3).

7. Dispositif selon l'une des revendications 1 à 6, **caractérisé en ce que** le second plan de couplage imaginaire (9) sur le châssis (2) est séparé par une distance fixe du premier plan de couplage imaginaire (7) du châssis (2).

8. Dispositif selon l'une des revendications 1 à 6, **caractérisé en ce que** les premier et second plans de couplage imaginaires (7, 9) sont confondus sur le châssis (2).

9. Dispositif selon l'une des revendications 1 à 8, **caractérisé en ce que** le premier plan de couplage imaginaire (5) de l'unité de déplacement (3) est séparé par une distance fixe du second plan de couplage imaginaire (8) de l'unité de déplacement (3).

10. Dispositif selon l'une des revendications 1 à 7, **caractérisé en ce que** les premier et second plans de couplage imaginaires (5, 8) de l'unité de déplacement (3) sont confondus.

11. Dispositif selon l'une des revendications 1 à 10, **caractérisé en ce qu'**un dispositif supplémentaire de réglage (15) pour le support momentané de l'unité de déplacement (3) est couplé, sur la périphérie à l'unité de déplacement (3) par l'intermédiaire d'un premier organe de liaison (4) et est articulé sur le châssis (2) par l'intermédiaire d'un second organe de liaison (6).

12. Dispositif selon l'une des revendications 1 à 11, **caractérisé en ce que** l'unité de déplacement (3) comporte des interfaces (16) pour recevoir des outils (14, des opérateurs (17), des unités (18), des manipulateurs (31) et analogues et que des unités d'axes supplémentaires (18) sont disposées avantageusement sur l'unité de déplacement (3),

13. Dispositif selon l'une des revendications 1 à 12, **caractérisé en ce que** le châssis (2) est agencé sous la forme d'un cadre.

14. Dispositif selon l'une des revendications 1 à 13, **caractérisé en ce que** le châssis (2) possède une section transversale polygonale.

15. Dispositif selon les revendications 1 à 14, **caractérisé en ce que** le châssis (2) comporte une partie de châssis (21), à laquelle est raccordée frontalement au moins une autre partie de châssis (22), qui possède de préférence une section qui diminue en direction de la face frontale libre, et que les seconds organes de liaison (6) des dispositifs de réglage (1) sont montés de préférence sur l'autre partie (22) du châssis.

16. Dispositif selon la revendication 15, **caractérisé en ce que** l'angle d'attaque (24) de l'autre partie (22) du châssis, qui est déterminé par le rétrécissement de la section transversale, est choisi en fonction de l'angle (25) des dispositifs de réglage (1) lorsque l'unité de déplacement (3) est dans la position neutre.

17. Dispositif selon l'une des revendications 1 à 16, **caractérisé en ce que** le châssis (2) entoure un espace intérieur (19), dans lequel l'unité de déplacement (3) est disposée au moins en partie.

18. Dispositif selon l'une des revendications 1 à 17, **caractérisé en ce que** le dispositif est agencé sous la forme d'un dispositif mobile, qui comporte des interfaces pour la commande / la régulation au moins des dispositifs de réglage (1) et de l'unité de déplacement (3).

19. Dispositif selon l'une des revendications 1 à 18, **caractérisé en ce que** les premier et/ou second organes de liaison (4, 6) sont agencés de manière à être sans couple, de préférence sous la forme d'éléments en forme de billes ou de joints de cardan.

20. Dispositif selon l'une des revendications 1 à 19, **caractérisé en ce que** l'entretoise (37) du dispositif de réglage (1) peut être déplacée dans sa direction longitudinale par rapport au châssis (2) au moyen du dispositif d'entraînement (27), et que de préférence le dispositif d'entraînement (27) est monté sur le châssis (2) et travaille avantageusement par voie mécanique, électromécanique, hydraulique ou pneumatique.

21. Dispositif selon l'une des revendications 1 à 20, **caractérisé en ce que** sur l'unité de déplacement (3) est prévue une unité à broche (29), qui possède de préférence un logement pour l'outil (14).

22. Dispositif selon l'une des revendications 1 à 21, **caractérisé en ce que** sur l'unité de déplacement (3) est prévue une unité de guidage de faisceau (30) pour positionner un faisceau de haute énergie, de préférence un faisceau laser.

23. Dispositif selon l'une des revendications 1 à 22, **caractérisé en ce que** le dispositif comporte au moins une table (13) pour recevoir une pièce à traiter (28), un objet et analogue, qui est montée avantageusement sur un châssis de base (11, 12).

24. Dispositif selon la revendication 23, **caractérisé en ce que** le dispositif est porté par des colonnes (11) du châssis de base (11, 12) et que de préférence sur le châssis de base (11, 12) est prévu au moins un magasin (54) pour des outils (14), des têtes d'outils, des instruments de mesure et analogues, et auquel est associé de préférence un changeur.

25. Dispositif selon la revendication 23 ou 24, **caractérisé en ce que** la table (13) peut tourner autour d'au moins un axe (34), qui avantageusement est intégré dans la table (13).

26. Dispositif selon l'une des revendications 23 à 25, **caractérisé en ce que** la table (13) comporte au moins un axe de commande numérique (35).

27. Dispositif selon l'une des revendications 1 à 26, **caractérisé en ce que** le dispositif est situé dans la partie d'amenée d'au moins un système de transport (33).

28. Dispositif selon l'une des revendications 1 à 27, **caractérisé en ce que** le châssis (2) est disposé horizontalement.

29. Dispositif selon l'une des revendications 1 à 28, **caractérisé en ce que** le châssis (2) est disposé en faisant un angle par rapport à l'horizontale.

30. Dispositif selon l'une des revendications 1 à 29, **caractérisé en ce qu'**au moins deux dispositifs sont reliés entre eux, ces dispositifs étant reliés entre eux de préférence par des supports intermédiaires (57), de préférence des cadres intermédiaires, qui relient avantageusement entre eux les châssis (2) de deux dispositifs voisins.

31. Dispositif selon l'une des revendications 1 à 30, **caractérisé en ce qu'**au moins deux dispositifs sont reliés à une base (58) qui est reliée de préférence par d'autres supports intermédiaires (57), aux châssis (2) des dispositifs.

32. Dispositif selon la revendication 30 ou 31, **caractérisé en ce qu'**au moins deux unités, qui sont formées chacune par au moins deux dispositifs, sont reliées entre elles.

33. Dispositif selon l'une des revendications 1 à 32, **caractérisé en ce qu'**au dispositif est associé au moins un dispositif de mesure (62), au moyen duquel la position de l'unité de déplacement (3) peut être détectée à l'arrêt et lors de déplacements sur trajectoire.
